# EUROPEAN PATENT SPECIFICATION

(11) **EP 3 369 710 B1**
(45) Date of publication and mention of the grant of the patent: **15.02.2023**
(21) Application number: 16858567.7
(22) Date of filing: 28.10.2016
(51) Int. Cl.: C02F 1/469, C02F 9/06, C01B 39/04, C01B 39/08, B01D 61/42, B01D 61/44, B01D 61/46, B01D 61/58, C02F 9/00, C01B 39/00, C02F 1/52, C02F 1/66, C02F 101/38

(54) **WASTEWATER TREATMENT METHOD, WASTEWATER TREATMENT SYSTEM, MOLECULAR SIEVE MANUFACTURING METHOD AND MANUFACTURING SYSTEM**
ABWASSERBEHANDLUNGSVERFAHREN, ABWASSERBEHANDLUNGSSYSTEM, MOLEKULARSIEBHERSTELLUNGSVERFAHREN UND HERSTELLUNGSSYSTEM
PROCÉDÉ DE TRAITEMENT D'EAUX USÉES, SYSTÈME DE TRAITEMENT D'EAUX USÉES, PROCÉDÉ DE FABRICATION ET SYSTÈME DE FABRICATION DE TAMIS MOLÉCULAIRE

(30) Priority: 30.10.2015 CN 201510725846; 30.10.2015 CN 201510726164; 30.10.2015 CN 201510726216; 30.10.2015 CN 201510726250
(43) Date of publication of application: 05.09.2018
(73) Proprietor: China Petroleum & Chemical Corporation, Beijing 100728 (CN); Research Institute Of Petroleum Processing, Sinopec, Beijing 100083 (CN)
(72) Inventor: LIU, Zhongqing, Beijing 100083 (CN); LUO, Yibin, Beijing 100083 (CN); ZHOU, Lina, Beijing 100083 (CN); SHU, Xingtian, Beijing 100083 (CN)
(74) Representative: Hoffmann Eitle
(86) International application number: PCT/CN2016/000593
(87) International publication number: WO 2017/071116

(56) References cited:
- WO-A1-2014/028465
- CN-A- 103 771 434
- CN-A- 103 771 436
- CN-A- 104 030 499
- CN-A- 104 030 499
- CN-A- 104 370 293
- CN-A- 105 540 743
- CN-A- 105 540 762
- CN-A- 105 540 943
- CN-A- 105 540 944
- CN-A- 105 540 945
- GB-A- 1 094 496
- JP-A- 2006 212 526
- YAOMING WANG ET AL: "Electrodialysis Process for the Recycling and Concentrating of Tetramethylammonium Hydroxide (TMAH) from Photoresist Developer Wastewater", INDUSTRIAL & ENGINEERING CHEMISTRY RESEARCH, vol. 52, no. 51, 13 December 2013 (2013-12-13), pages 18356-18361, XP055593924, ISSN: 0888-5885, DOI: 10.1021/ie4023995

## Description

### Technical field

The present invention relates to a method for a wastewater treatment and the treatment system thereof. The present invention also relates to a method for the preparation of a molecular sieve and the preparation system thereof.

### Background of the technology

TS-1 molecular sieve is a titanium silicate molecular sieve having MFI structure. It has been widely applied for its excellent selective oxidation property, relatively high catalytic activity, and good catalytic activity in an organic oxidation, such as epoxidation of olefin, cyclohexanone oximation and alcohol oxidation.

TS-1 molecular sieve is generally synthetized by the hydrothermal crystallizing process using a directing agent.

CN1167082A discloses a method for preparing a titanium silicate molecular sieve having MFI structure. According to the method, a titanium source is dissolved in an aqueous solution of tetrapropylammonium hydroxide, then uniformly mixed with solid silica-gel spheres to obtain a reaction mixture. The reaction mixture is subjected to a hydrothermal crystallization at 130-200 °C for 1-6 days in an autoclave before being filtered, washed, dried and calcinated so as to obtain the titanium silicate molecular sieve having MFI structure.

CN1239015 A discloses a method for preparing a titanium silicate molecular sieve TS-1 having MFI structure. According to the method, a as to obtain the titanium silicate molecular sieve having MFI structure.

CN1239015 A discloses a method for preparing a titanium silicate molecular sieve TS-1 having MFI structure. According to the method, a product is obtained by firstly preparing a reaction mixture used for synthesizing the molecular sieve TS-1, pre-crystallizing the reaction mixture at 110-145 °C for 0.1-5 hours in a sealed reaction kettle, and then raising the temperature to 150-200°C for a further crystallization for 1 hour to 3 days.

CN1239016 discloses a method for preparing a titanium silicate molecular sieve TS-1 having MFI structure, comprising:
(1) hydrolyzing a silicon source, an organic amine compound and water in a proportion at an temperature of 0-40°C for 10 to 300 minutes to obtain a silicon hydrolysis solution, wherein the organic amine compound are an aliphatic amine or an alcohol amine compound;
(2) mixing a titanium source, isopropanol, organic alkali and water in a proportion and hydrolyzing the mixture at an temperature of 0-40°C for 5 to 90 minutes to obtain a titanium hydrolysis solution, wherein the organic alkali is tetrapropylammonium hydroxide or a mixture of tetrapropylammonium hydroxide and an alcohol amine compound;
(3) the titanium hydrolysis solution produced in step (2) and the silicon hydrolysis solution produced in step (1) are mixed in a proportion at an temperature of 50-100°C and stirred for 0.5 to 6 hours for reaction to produce a titanium-silicon colloid;
(4) The titanium-silicon colloid produced in step (3) is subjected to a hydrothermal crystallization in a sealed reaction kettle by a conventional process. After that, the product is recovered.

Thus it is clear that quaternary ammonium hydroxide (such as tetrapropylammonium hydroxide) is usually used as a template in the synthesis of titanium silicate molecular sieves (such as titanium silicate molecular sieve TS-1). The template which plays a structure guiding role can promote the formation of the structure units, cages or channels of a molecular sieve. It is an indispensable raw material for the synthesis of titanium silicate molecular sieves in the process of hydrothermal synthesis.

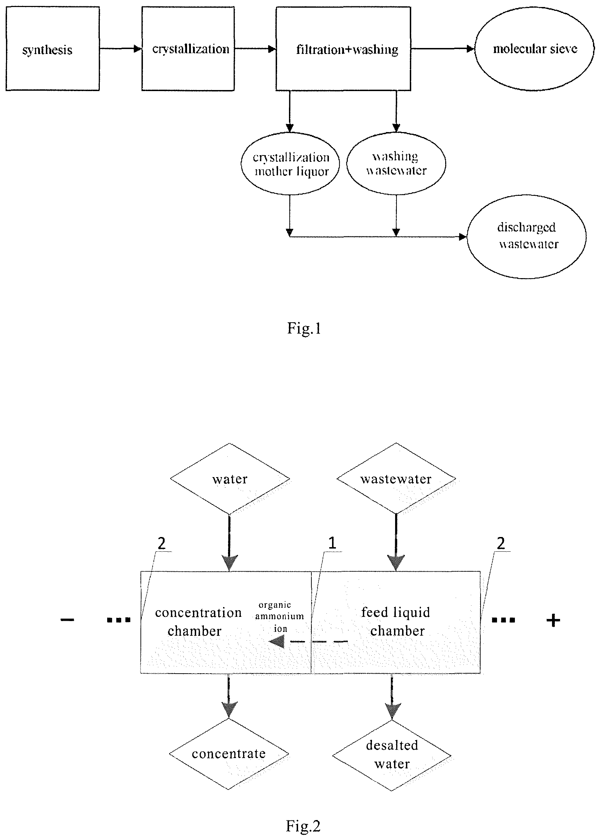

In a practical production, the complete preparation process for a molecular sieve is (as depicted in FIG. 1): the titanium source, the silicon source and the template and water are reacted in the synthesis step; the reaction mixture obtained is subjected to a hydrothermal crystallization; the crystallized mixture is then filtered and washed to produce the molecular sieve product. As shown in FIG. 1, the process of both filtration and washing of a molecular sieve produces wastewater in a high amount. Generally, 10-20 tons of wastewater can be produced from 1 ton of the end product of molecular sieves. The COD value (potassium dichromate method) of the wastewater is up to 50 thousands or more, sometimes even up to 100 thousands or more. The main source of COD is the template of tetrapropylammonium hydroxide used in the production of molecular sieves.

Organic amine (ammonium) is a toxic and harmful substance. Hence the wastewater containing organic amine (ammonium) must be purified so that the water quality can meet to standard (COD is 60mg/L or less) before being discharged. The current methods for treating wastewater containing organic amine (ammonium) include the processes of anaerobic oxidation, advanced oxidation, membrane separation, adsorption and incineration.

CN104098228A has disclosed a method for treating organic amine wastewater, comprising the following steps:
A. preoxidation
   The organic amine wastewater is pre-oxidized with Fenton or 03 to decompose toxic and harmful substances and improve the biodegradability of the wastewater. The pre-oxidized wastewater is regulated until neutral, and then precipitated in the sedimentation tank for 2-4 hours;
B. anaerobic
   The precipitated wastewater is subjected to an anaerobic treatment to remove organics;
C. anoxic-oxic bioreactor
   The anaerobic effluent is introduced into an anoxic-oxic bioreactor to remove COD and nitrogen in the sewage;
D. enhanced coagulation
   The effluent from the anoxic-oxic bioreactor is subjected to an enhanced coagulation to remove the hydrophobic organic substances from the biologically treated effluent.
E. advanced oxidation
   The effluent after the enhanced coagulation is subjected to an advanced oxidation to produce hydroxyl radicals with a strong oxidizing capacity, which oxidize large molecule organics difficult to be degraded into low toxic or non-toxic small molecules.
F. advanced treatment using a biological method
   The effluent from the advanced oxidation is introduced into a biological aerated filter, wherein the residence time and the dissolved oxygen are controlled in order to further remove the COD. Hence the effluent can satisfy the standard.

CN104211250A discloses a method for recycling organic amine in AK sugar industrial wastewater, comprising the following steps:
The wastewater is neutralized by a lime powder to make the pH value of water close to neutral. The lime powder is added batchwise and stirred intensely. The neutralized calcium sulfate is removed by a suction filtration. The pH of the filtrate in the vaporizing tank is adjusted to about 8 with sodium carbonate so that the amine can be released. Fractions of organic amines are collected by fractionation via a fractionating tower. Lastly, the organic amine is dried via a molecular sieve and dehydrated by a resin adsorption. A reusable organic amine is thus produced.

CN104230077A discloses a method for treating organic amine wastewater containing phosphorus, aluminum and silicon, comprising the following steps:
(1) passing the organic amine wastewater containing phosphorus, aluminum and silicon through a heavy component removal tower, discharging the heavy components in the wastewater after concentration from a tower bottom; sending the heavy components into a wastewater spray drying system; sending light components in the top of the heavy component removal tower into a light component removal tower for a further purification;
(2) sending the wastewater in the tower bottom of the light component removal tower back to a molecular sieve crystallization unit for recycling, subjecting the water and the organic amine obtained at the top of the light component removal tower to a liquid-liquid separation, sending the aqueous phase back to the light component removal tower, sending the organic amine as obtained to a refining tower for a purification and recovering the organic amine.

CN103304430A discloses a process for recovering organic amine from the wastewater from the production of a catalyst, comprising:
(1) recovering the catalyst in wastewater: intercepting and recovering the particulate-shape molecular sieves present in the wastewater in a small amount by using a microstrainer;
(2) an organic amine adsorption process: adsorbing the organic amine in the wastewater by using a cationic resin, and regenerating it to an organic amine salt by using acid;
(3) reducing the organic amine salt into organic amine through an anion resin exchange, taking the reduced organic amine as production materials for recycling, and regenerating the anion exchange resin by using NaOH.

CN102399032A discloses a method for treating organic amine industrial wastewater by Fenton-like oxidation-coagulation, comprising the following steps:
(1) the pH of the wastewater is adjusted to 3-5, and the temperature of the wastewater is adjusted to 20-40°C;
(2) a catalyst is added, wherein active ingredients of the Fenton-like oxidation catalyst are: ferrous sulfate heptahydrate, anhydrous cupric sulphate and manganese sulfate monohydrate, wherein the mass ratio of the above components is (5-10):1:(0-5);
(3) H₂O₂ with a mass percent concentration of 30% is added, and the oxidation reaction time is 1-4 hours;
(4) after the oxidation reaction, sodium hydroxide is added to adjust the pH value of the wastewater to 8-10; adding a chemical coagulant and an organic polymer flocculant; a part of the suspended solids, colloids and partial organic amines in the wastewater are concurrently coagulated.

CN102079712A discloses a method for recovering the anhydrous organic amine from organic amine salt, comprising using calcium oxide or a mixture containing more than 50 percent of calcium oxide as a raw material, and reacting the above with the organic amine salt under stirring to recover the anhydrous organic amine.

CN102151544A discloses an organic wastewater modified bentonite adsorbent. According to the method, the adsorbent is obtained by using the organic amine in the organic amine wastewater as the modifying agent and modifying the purified sodium-based or calcium-based bentonite. In the method, the purified bentonite powder material is added into the organic amine wastewater and stirred for 10-120 minutes at ambient temperature. An organic wastewater modified bentonite filter cake is obtained from filtration and then dried and ground under the condition of 90-105°C to produce an organic wastewater modified bentonite. Said organic wastewater modified bentonite is placed in a muffle furnace for a calcination and cooled to ambient temperature. Thus an adsorbent is obtained.

CN103663609A discloses a method for treating high-COD organic wastewater through a microwave catalytic oxidation. According to the method, microwaves are radiated to the surface of a microwave catalyst to produce a strong oxidizing group for oxidizing the high-COD organic wastewater, so that organic matters such as organic amine therein can be oxidized and degraded into CO₂ and water or inorganic acid ions.

CN104529034A discloses a method for recovering the tetrapropylammonium hydroxide in wastewater from a catalyst production. The nanofiltration membrane has a relatively high removal rate for divalent or multivalent ions and organic matters having a molecular weight between 200 and 500. The tetrapropylammonium hydroxide molecules can be separated effectively by nanofiltration. The pH of the wastewater is regulated to 5-7 using 10% by weighthydrochloric acid. The pressure of the nanofiltration device is adjusted to 20kg. Wastewater with the regulated pH is injected into the nanofiltration inlet. Concentrated water and dilute water in ratio of 1:5 are obtained by nanofiltration interception. The concentrated water is continuously injected to the nanofiltration device. The pressure is increased to 25kg to obtain concentrated water and dilute water in ratio of 1:2 of the second step by means of a further concentration. The above step is repeated to perform the third operation with a pressure of 30kg, wherein concentrated water and dilute water in ratio of 1:1 are obtained. All the dilute water obtained above is mixed. The obtained concentrated water has a concentration which is 36 folds of the original water.

CN104773787A discloses a method for reducing the chemical oxygen demand of the wastewater from the zeolite molecular sieve production, comprising that hydrogen peroxide is added into the wastewater from the zeolite molecular sieve production to conduct an oxidative degradation on the organic nitrogen-containing compound in the wastewater from the zeolite molecular sieve production under the ultraviolet irradiation. The organic nitrogen-containing compound is one or more of a quaternary ammonium salt, quaternary ammonium hydroxide, and organic amine.

CN104773786A discloses a method for reducing the total organic carbon content of the wastewater from the zeolite molecular sieve, comprising that hydrogen peroxide is added into the wastewater from the zeolite molecular sieve production to conduct an oxidative degradation on the organic nitrogen-containing compound in the wastewater from the zeolite molecular sieve production under ultraviolet irradiation. The organic nitrogen-containing compound is one or more of a quaternary ammonium salt, quaternary ammonium hydroxide, and organic amine.

CN 104030499 discloses a treatment method of solution comprising silicates and a quaternary ammonium hydroxide. The method involves the use of a bipolar membrane electrodialysis system but does not refer to a styrene-type homogeneous cation exchange membrane.

YAOMING WANG et al. in "Electrodialysis Process for the Recycling and Concentrating of Tetramethylammonium Hydroxide (TMAH) from Photoresist Developer Wastewater" (INDUSTRIAL & ENGINEERING CHEMISTRY RESEARCH, vol. 52, no. 51, 13 December 2013 (2013-12-13), pages 18356-18361) describes an electrodialysis process for the treatment of wastewater containing an organic ammonium ion, which comprises a pretreatment of the wastewater . The system used is described in figure 1 and does not include a styrene-type homogeneous cation exchange membrane.

### Summary of the invention

The present invention provides a method for the treatment of wastewater and the treatment system thereof. The treatment of the wastewater containing an organic ammonium ion using an electrodialysis method not only can effectively reduce the content of the organic ammonium ion in the wastewater but also can concentrate the organic ammonium ion in an electrodialysis alkali liquor to recover the organic ammonium ion. The present invention also relates to the preparation of a molecular sieve and the preparation system of a molecular sieve.

According to the first aspect of the present invention, the present invention provides a method for the treatment of wastewater containing at least one organic ammonium ion and optionally impurities such as soluble silica. The method comprises the electrodialysis of optionally pretreated wastewater to obtain desalted water having a reduced content of organic ammonium ion and an alkali liquor containing an organic ammonium ion, wherein the said electrodialysis is carried out in at least one electrodialyser. The membrane stack of the electrodialyser has at least one membrane unit, wherein the membranes in at least a part of the membrane unit(s) comprise a styrene-type homogeneous cation exchange membrane.

According to the second aspect of the present invention, the present invention provides a wastewater treatment system as defined in the claims.

The wastewater storage unit is used for receiving and storing wastewater.

The optional pretreatment unit is used for contacting the wastewater from

The wastewater storage unit is used for receiving and storing wastewater.

The optional pretreatment unit is used for contacting the wastewater from the wastewater storage unit with at least one precipitant so that the silicon in the wastewater can form a colloid. Then after a solid-liquid separation a liquid phase and a solid phase are obtained.

The common electrodialysis unit is used for carrying out a common electrodialysis on the wastewater or said liquid phase to obtain a first desalted water having a reduced content of organic ammonium ion and a concentrate containing an organic ammonium ion.

The bipolar membrane electrodialysis unit is used for carrying out a bipolar membrane electrodialysis on the concentrate from the electrodialysis unit to obtain an acid liquor, an alkali liquor containing an organic ammonium ion and an optional second desalted water.

In one embodiment of the wastewater treatment system, the common electrodialysis unit comprises at least one common electrodialyser. The membrane stack of the common electrodialyser has at least one membrane unit, wherein the membranes in at least a part of the membrane unit(s) are a cation exchange membrane and an anion exchange membrane. The said cation exchange membrane and the said anion exchange membrane divide the internal space of the membrane unit into a feed liquid chamber and a concentration chamber.

In one embodiment of the wastewater treatment system, the bipolar membrane electrodialysis unit comprises at least one bipolar membrane electrodialyser, the membrane unit of which adopts one, two or three of the following methods:
Method 1: the membranes in the membrane unit are a bipolar membrane and a cation exchange membrane. The said bipolar membrane and the said cation exchange membrane divide the internal space of the membrane unit into an alkali chamber and a feed liquid chamber;
Method 2: the membranes in the membrane unit are a bipolar membrane and an anion exchange membrane. The said bipolar membrane and the said anion exchange membrane divide the internal space of the membrane unit into an acid chamber and a feed liquid chamber;
Method 3: the membranes in the membrane unit are a bipolar membrane, an anion exchange membrane and a cation exchange membrane. The said bipolar membrane, the said anion exchange membrane and the said cation exchange membrane divide the internal space of the membrane unit into an acid chamber, a feed liquid chamber and an alkali chamber; the feed liquid chamber is located between the acid chamber and the alkali chamber.

According to the third aspect of the invention, the present invention provides a method for the preparation of a molecular sieve, comprising a synthetic step, a crystallization step, a separation and washing step and a wastewater treatment step;
in the synthetic step, the raw material is contacted with water for reaction, wherein the raw material contains a silicon source, an organic ammonium hydroxide and an optional titanium source;
in the crystallization step, the reaction mixture obtained from the synthesis step is crystallized;
in the separation and washing step, the mixture obtained from the crystallization step is subjected to a solid-liquid separation to produce a solid phase and a crystallization mother liquor. The said solid phase is washed to obtain a molecular sieve and washing wastewater.

In the wastewater treatment process, an alkali liquor containing an organic ammonium ion and desalted water having a reduced content of organic ammonium ion are produced from the electrodialysis of the wastewater. The said wastewater is the crystallization mother liquor, the washing wastewater or a mixture of the crystallization mother liquor and the washing wastewater. The wastewater is subjected to an electrodialysis using the method according to the first aspect of the present invention.

According to the fourth aspect of the invention, the invention provides a molecular sieve preparation system which comprises a synthesis unit, a crystallization unit, a separation and washing unit and a wastewater treatment unit;
the synthetic unit is used for contacting the raw material with water for reaction. The said raw material contains a silicon source, an organic ammonium hydroxide and an optional titanium source;
the crystallizing unit is used for crystallizing the reaction mixture obtained from the synthesis step;
the separation and washing unit is used for a solid-liquid separation of the mixture obtained from the crystallization step to produce a solid phase and a crystallization mother liquor. The solid phase is then washed to obtain a molecular sieve and washing wastewater;
the wastewater treatment unit is used for an electrodialysis of the wastewater to produce an alkali liquor containing an organic ammonium ion and desalted water having a reduced content of organic ammonium ion. The said wastewater is the crystallization mother liquor, the washing wastewater or a mixture of the crystallization mother liquor and the washing wastewater, wherein the said electrodialysis is carried out in at least one electrodialyser. The membrane stack of the electrodialyser has at least one membrane unit, wherein the membranes in at least a part of the membrane units comprise a cation exchange membrane. Preferably, the said cation exchange membrane is a styrene-type homogeneous cation exchange membrane.

According to the fifth aspect of the present invention, the present invention provides another wastewater treatment system, wherein the wastewater is the wastewater containing an organic ammonium ion from the preparation of a molecular sieve. The system comprises a desalination tank, an intermediate salt tank, electrodialyser, a bipolar membrane electrodialyser, an alkali liquor tank, an acid liquor tank and an optional desalted water tank.

The membranes in the membrane units of the electrodialyser are a cation exchange membrane and an anion exchange membrane; the cation exchange membrane and the anion exchange membrane divide the internal space of the membrane unit into a feed liquid chamber and a concentration chamber. The membranes in the membrane unit of the bipolar membrane electrodialyser are a bipolar membrane, a cation exchange membrane and an anion exchange membrane; the bipolar membrane, the cation exchange membrane and the anion exchange membrane divide the internal space of the membrane unit into a feed liquid chamber, an acid chamber and an alkali chamber; the feed liquid chamber is located between the acid chamber and the alkali chamber.

The desalination tank is used for receiving wastewater and is communicated with the feed liquid chamber of the electrodialyser in the electrodialysis unit, providing feed water to the feed liquid chamber and optionally receiving the effluent from the feed liquid chamber.

The intermediate salt tank which is communicated with the concentration chamber of the electrodialyser provides feed water to the concentration chamber and receives the effluent from the concentration chamber. The feed liquid chamber of the bipolar membrane electrodialyser is communicated with the intermediate salt tank to receive the concentrate discharged from the intermediate salt tank as the feed water.

The alkali liquor tank is communicated with the alkali chamber of the bipolar membrane electrodialyser for receiving the alkali liquor discharged from the alkali chamber of the bipolar membrane electrodialyser, and providing feed water to the alkali chamber of the bipolar membrane electrodialyser.

The acid liquor tank is communicated with the acid chamber of the bipolar membrane electrodialyser for receiving the acid liquor discharged from the acid chamber of the bipolar membrane electrodialyser, and providing feed water to the acid chamber of the bipolar membrane electrodialyser.

The desalted water tank is communicated with the alkali liquor tank and the acid liquor tank and with the desalination tank or with the feed liquid chamber of the electrodialyser for receiving the first desalted water discharged from the desalination tank or for receiving the first desalted water discharged from the feed liquid chamber of the electrodialyser, and simultaneously providing feed water to the alkali liquor tank and the acid liquor tank.

The treatment of wastewater containing an organic ammonium ion using an electrodialysis in the present invention can effectively reduce the organic ammonium ion (particularly tetrapropyl organic ammonium ion) content in the wastewater and obtain an organic ammonium ion-enriched concentrated liquor. While reducing the organic ammonium ion content of the wastewater and thereby reducing the COD value of the wastewater, it recovers a concentrated liquor containing an organic ammonium ion. The concentrated liquor containing an organic ammonium ion and desalted water which are recovered by treating the wastewater containing an organic ammonium ion from the production of a molecular sieve using the present method can be recycled with substantively no discharge of wastewater or solid wastes in the whole process, which realizes an effective reuse of resources.

### Brief description of the drawings

The drawings which are provided for a further understanding of the invention constitute a part of the specification. The drawings are used to explain the present invention together with the following specific embodiments but do not constitute restrictions on the invention.
FIG. 1 is a typical flow process for the preparation of a molecular sieve.
FIG.2 is an embodiment of the treatment of the wastewater using a common dual-chamber electrodialysis.
FIG.3 is an embodiment of the treatment of wastewater using a dual-chamber bipolar membrane electrodialysis.
FIG.4 is an embodiment of the treatment of wastewater using a triple-chamber bipolar membrane electrodialysis.
FIG.5 is an embodiment of the treatment of wastewater using a common electrodialysis-bipolar membrane electrodialysis.
FIG. 6 is used to illustrate a method for the preparation of a molecular sieve and a molecular sieve preparation system according to the present invention.
FIG. 7 is used to illustrate an embodiment of the electrodialysis according to the method and the system of the present invention.
FIG. 8 is used to illustrate the first embodiment of the bipolar membrane electrodialysis according to the method and the system of the present invention.
FIG. 9 is used to illustrate the second embodiment of the bipolar membrane electrodialysis according to the method and the system of the present invention.
FIG. 10 is used to illustrate the third embodiment of the bipolar membrane electrodialysis according to the method and the system of the present invention.
FIG. 11 is used to illustrate a preferable embodiment according to the method and the system of the molecular sieve preparation of the present invention.
FIG. 12 is used to illustrate another preferable embodiment according to the method and the system of the molecular sieve preparation of the present invention.

### Description of the reference signs

| | |
|---|---|
| 1: cation exchange membrane | 2: anion exchange membrane |
| 3: bipolar membrane | |

### Specific embodiments

group. The said organic ammonium ion is an organic ammonium ion as represented by formula I,

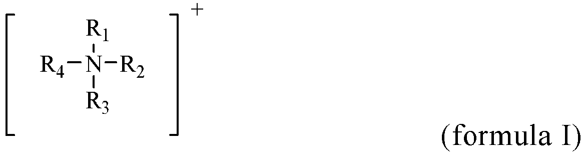

In formula I, R₁, R₂, R₃ and R₄ are independently selected from C₁-C₅ alkyl and C₆₋C₁₂ aryl. The C₁-C₅ alkyl includes C₁-C₅ linear alkyl and C₃-C₅ branched alkyl. The specific examples include methyl, ethyl, n-propyl, isopropyl, n-butyl, sec-butyl, isobutyl, tert-butyl, n-amyl, isoamyl, tert-amyl and neo-amyl. Specific examples of the C₆-C₁₂ aryl may include but are not limited to: phenyl, naphthyl, 4-methylphenyl, 2-methylphenyl, 3-methylphenyl, 4-ethylphenyl, 2- ethylphenyl and 3- ethylphenyl.

Preferably, the organic ammonium ion can be tetramethyl-ammonium ion, tetraethylammonium ion, tetrapropylammonium ion, and tetrabutyl ammonium ion. As a preferable example, the organic ammonium ion is tetrapropylammonium ion.

The organic ammonium ion can be derived from an organic ammonium hydroxide and/or an organic ammonium salt. The anion of the organic ammonium salt can be a common anion, such as a halogen ion, preferably a chloride or bromine ion, which is able to form a water-soluble salt with the organic ammonium ion.

The wastewater can be wastewater containing the organic ammonium ion from various sources. Preferably, the wastewater is one from the preparation of a molecular sieve using organic ammonium hydroxide as the template, for example, the wastewater produced in the preparation of a from various sources. Preferably, the wastewater is one from the preparation of a molecular sieve using organic ammonium hydroxide as the template, for example, the wastewater produced in the preparation of a molecular sieve in the hydrothermal crystallization process with a directing agent. Specifically, the wastewater can be the crystallization mother liquor produced from the preparation of a molecular sieve using organic ammonium hydroxide,the washing wastewater produced from the preparation of a molecular sieve using organic ammonium hydroxide, or a mixture of the crystallization mother liquor and the washing wastewater. In one embodiment, the said wastewater can further comprise impurities such as soluble silica in addition to organic ammonium hydroxide.

The said organic ammonium hydroxide can be organic ammonium hydroxide suitable as a structural directing agent for the molecular sieve. Specifically, the organic ammonium hydroxide is selected from the compound repressed by formula II

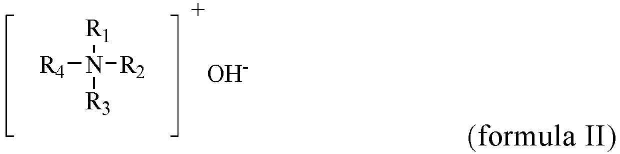

In formula II, R₁, R₂, R₃ and R₄ are independently selected from C₁-C₅ alkyl, and C₆₋C₁₂ aryl. The C₁-C₅ alkyl comprises C₁-C₅ linear alkyl and C₃-C₅ branched alkyl. Specific examples include methyl, ethyl, n-propyl, isopropyl, n-butyl, sec-butyl, isobutyl, tert-butyl, n-amyl, isoamyl, tert-amyl and neo-amyl. Specific examples of the C₆-C₁₂ aryl may include but are not limited to: phenyl, naphthyl, 4-methylphenyl, 2-methylphenyl, 3-methylphenyl, 4-ethylphenyl, 2-ethylphenyl and 3-ethylphenyl.

Preferably, the organic ammonium hydroxide is tetramethylammonium hydroxide, tetraethylammonium hydroxide, tetrapropylammonium hydroxide, and tetrabutylammonium hydroxide. As a preferable example, the organic ammonium hydroxide is tetrapropylammonium hydroxide.

The molecular sieve can be a variety of common molecular sieves, such as at least one selected from the group consisting of titanium silicate molecular sieve, BETA molecular sieve, SSZ-13 molecular sieve and Silicate-1, which are prepared in the hydrothermal synthesis process using organic ammonium hydroxide as the template. The titanium silicate molecular sieve is a general term for a group of zeolites wherein a part of the silicon atoms in the lattice framework are substituted with titanium atoms. The titanium silicate molecular sieve may be one or more selected from the group consisting of a titanium silicate molecular sieve having MFI structure (such as TS-1), a titanium silicate molecular sieve having MEL structure (such as TS-2), a titanium silicate molecular sieve having BEA structure (such as Ti-Beta), a titanium silicate molecular sieve having MWW structure (such as Ti-MCM-22), a titanium silicate molecular sieve having hexagonal structure (such as Ti-MCM-41, Ti-SBA-15), a titanium silicate molecular sieve having MOR structure (such as Ti-MOR), a titanium silicate molecular sieve having TUN structure (such as Ti-TUN), and titanium silicate molecular sieves having other structures (such as Ti-ZSM-48).

As a preferable example, the molecular sieve is a titanium silicate molecular sieve, preferably a titanium silicate molecular sieve TS-1 and/or hollow titanium silicate molecular sieve. The hollow titanium silicate molecular sieve is a titanium silicate molecular sieve having MFI structure. The crystal grain of the titanium silicate molecular sieve has a hollow structure. The radial length of the cavity of the hollow structure is 5-300 nm. The benzene adsorption of the titanium silicate molecular sieve measured under the conditions of 25°C and P/P₀=0.10 for the adsorption time of one hour is at least 70 mg/g. There is a hysteresis loop between the adsorption isotherms and the desorption isotherms of the low-temperature example, the molecular sieve of the type HTS purchased from Hunan Jianchang petrochemical Co. Ltd) or can be prepared according to the method as disclosed in CN1132699C.

The organic ammonium ion content in the wastewater is not particularly limited but depends on the source of the wastewater. Generally, the concentration of the organic ammonium ion in wastewater can be 1000mg/L or more, e.g., 2000mg/L or more, or even 10000mg/L or more, e.g., 15000mg/L or more. The upper limit of the organic ammonium ion content in the wastewater is not particularly limited. The concentration of the organic ammonium ion in the wastewater usually can be 35000mg/L or less, e.g., 30000mg/L or less.

The wastewater treatment method according to the present invention comprises an electrodialysis of the wastewater in order to obtain desalted water having a reduced content of organic ammonium ion and a concentrate containing an organic ammonium ion.

The electrodialysis is carried out in at least one electrodialyser. The membrane stack of the electrodialyser has at least one membrane unit, wherein at least a part of the membrane unit(s) contain a cation exchange membrane which is preferably a homogeneous cation exchange membrane. Compared with a heterogeneous cation exchange membrane, the homogeneous cation exchange membrane has a better electrochemical performance so it has a better electrodialysis effect.

According to the wastewater treatment method of the present invention, the cation exchange membrane comprises a styrene-type homogeneous cation exchange membrane. The inventor of the present invention found in the study that when the styrene-type homogeneous cation exchange membrane was used for electrodialysis, the migration speed of the organic ammonium ion was closely associated with the material of the membrane was used for electrodialysis, the migration speed of the organic ammonium ion was closely associated with the material of the homogeneous cation exchange membrane, as was different from inorganic ions such as Na⁺; when a poly(ether-ether-ketone) homogeneous cation exchange membrane, perfluoroethylene sulfonic acid homogeneous cation exchange membrane or polysulfone homogeneous cation exchange membrane was used for electrodialysis, no good electrodialysis effect could be achieved even if a high voltage was applied on the membrane unit; the organic ammonium ion content in the produced desalted water was still very high. However, a good electrodialysis effect could be achieved when a styrene-type homogeneous cation exchange was used. The content of the organic ammonium ion in the produced desalted water was significantly reduced as the organic ammonium ion was enriched in the concentrate (alkali liquor).

According to the method of the present invention, the organic ammonium ion can be effectively separated by selecting the material, preferably a styrene-type homogeneous cation exchange membrane. The ion exchange capacity of the styrene-type homogeneous cation exchange is not particularly limited. Thus it can be a conventional selection, such as a 1-3meq/g dry membrane, preferably 1.5-3meq/g dry membrane and more preferably 1.8-2.6meq/g dry membrane, such as the 2-2.6 meq/g dry membrane. According to the method of the present invention, the membrane surface resistance of the styrene-type cation exchange membrane can be 1-15Ω·cm², preferably 2-12Ω·cm². According to the method of the invention, the membrane surface resistance of the styrene-type homogeneous cation exchange membrane is more preferably 4-9Ω·cm² for further improving the electrodialysis effect.

According to the wastewater treatment method of the present invention, the assembling form of the membrane units can be a conventional selection. The exemplary specification is provided in combination with the following FIG.2 to FIG.5. However a person skilled in the art can understand that the assembling form of the membrane units is not limited to the examples presented in FIG.2 to FIG.5 but can be other assembling forms. In the present invention, the electrodialysis wherein at least one membrane unit uses a bipolar membrane is called as a bipolar membrane electrodialysis; the electrodialysis wherein no bipolar membrane is used in the membrane units is called as a common electrodialysis. The common electrodialysis and the bipolar membrane electrodialysis are collectively referred to as electrodialysis. It should also be noted that all "..."s in the drawings indicate that a plurality of membrane units are set between the positive and negative electrodes of electrodialyser. These membrane units are not shown as they have the same membrane unit structures as those shown in the drawings.

In the first embodiment of the present invention, the electrodialysis is a common electrodialysis performed in the following manner. As shown in FIG. 2, the membranes in the membrane unit are cation exchange membrane 1 and anion exchange membrane 2; the cation exchange membrane 1 and the anion exchange membrane 2 divide the internal space of the membrane unit into a feed liquid chamber and a concentration chamber. In the performance of electrodialysis, the wastewater enters the feed liquid chamber and water (which can be deionized water and/or desalted water produced from electrodialysis) enters the concentration chamber. The organic ammonium ion and other cations in the wastewater enter the concentration chamber through cation exchange membrane 1 under the action of the electric field so that desalted water having a reduced content of organic ammonium ion and a concentrate enriched in the organic ammonium ion are obtained at the same time.

In the first embodiment, the number of common electrodialysers adopting the above common electrodialysis can be selected according to the processing load and the quality index of desalted water, without any specific limitation. In general, the number of common electrodialyser can be one or more. In case of more than one common electrodialysers, these common electrodialysers can be connected in series or in parallel, or the combination of the two.

In the present invention, the connection in series refers to a flow path of a fluid formed by an end-to-end connection of more than one electrodialysers. The desalted water discharged from the upstream electrodialyser enters the downstream electrodialyser which is directly connected thereto to continue the electrodialysis. Therefore, a multistage electrodialysis is achieved. In the present invention, a connection in parallel means a tributary form formed by more than one electrodialysers which have the same feeding water source, wherein the electrodialysers have no stream connection each other but the same source. Hence, a multi-machine parallel processing can be achieved and the processing load of the device is increased. In the present invention, the combination of connection in series and connection in parallel refers to that when a plurality of electrodialysers are used in combination, the connection in parallel is mixed with the connection in series. As an example of the combination of the connection in series and the connection in parallel, multiple groups of electrodialysers can be set wherein each group is connected in parallel while a connection in series is adopted inside each group. In this way, a multistage electrodialysis can be achieved and a higher processing load can be obtained.

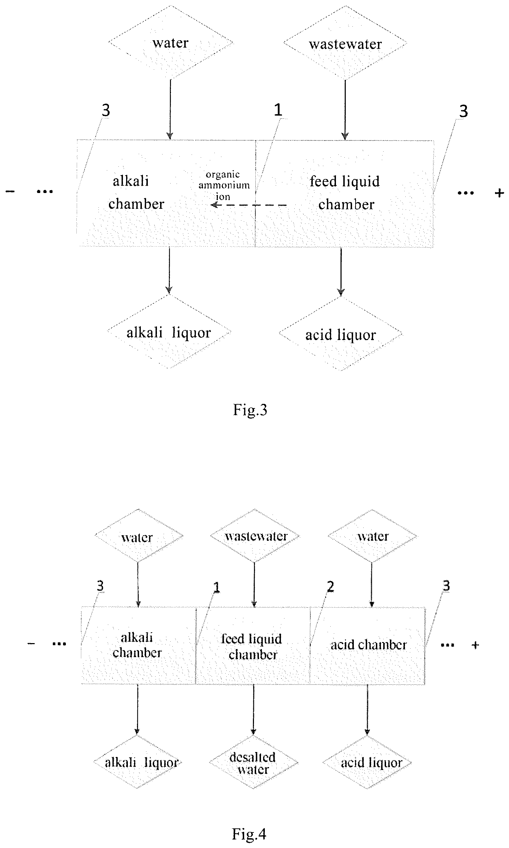

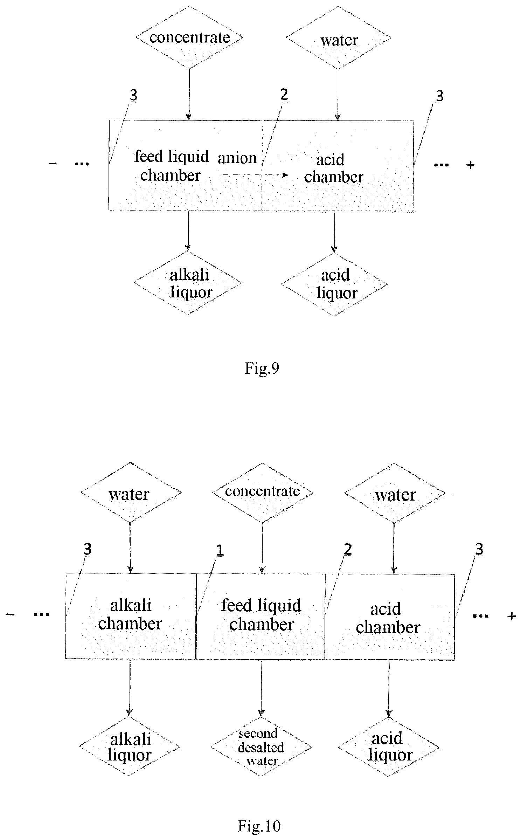

In the second embodiment, the electrodialysis is a bipolar membrane electrodialysis which can be carried out in a conventional method. Specifically, the bipolar membrane electrodialysis is the bipolar membrane electrodialys carried out using one of the following methods:
Method I: as shown in FIG. 3, the membranes in the membrane unit are a bipolar membrane 3 and a cation exchange membrane 1; the bipolar membrane 3 and cation exchange membrane 1 divide the internal space of the membrane unit into an alkali chamber and a feed liquid chamber. In the electrodialysis process, the wastewater enters the feed liquid chamber and water (which can be deionized water and/or desalted water produced from electrodialysis) enters the alkali chamber. The organic ammonium ion and other cations in the wastewater in the feed liquid chamber enter the alkali chamber through the cation exchange membrane and form an alkali liquor under the action of the electric field; an acid liquor having a reduced content of organic ammonium ion (i.e., desalted water) is produced in the feed liquid chamber.
Method II: As basically shown in FIG.9 (the "concentrate" means "the wastewater or the liquid phase"), the membrane stack of the bipolar membrane electrodialyser has at least one membrane unit, wherein the membranes in the membrane unit are bipolar membrane 3 and anion exchange membrane 2; the bipolar membrane 3 and anion exchange membrane 2 divide the internal space of the membrane unit into an acid chamber and a feed liquid chamber; the said wastewater or the said liquid phase enters the feed liquid chamber; the water enters the said acid chamber. In the electrodialysis process, an alkali liquor containing an organic ammonium ion is obtained from the feed liquid chamber and an acid liquor is obtained from the acid chamber;
Method III: as shown in FIG.4, the membranes in the membrane unit are bipolar membrane 3, anion exchange membrane 2 and cation exchange membrane 1; the bipolar membrane 3, anion exchange membrane 2 and cation exchange membrane 1 divide the internal space of the membrane unit into an acid chamber, a feed liquid chamber and an alkali chamber; the feed liquid chamber is located between the acid chamber and the alkali chamber. In the electrodialysis process, the wastewater enters the feed liquid chamber and water (which can be deionized water and/or desalted water produced from electrodialysis) enters the acid chamber and alkali chamber respectively. The organic ammonium ion and other cations in the wastewater in the feed liquid chamber enter the alkali chamber through the cation exchange membrane 1 and form an alkali liquor under the action of the electric field; the anions in the wastewater enter the acid chamber through the anion exchange membrane 2 and forms an acid liquor; desalted water having a reduced content of organic ammonium ion is produced in the feed liquid chamber.

The above Methods I, II and III can be used separately or in combination. In case of the preferable combination of Method I or Method II with Method III, Method I or Method II and Method III can be carried out in different membrane units of the same bipolar membrane electrodialyser or carried out in different bipolar membrane electrodialysers. Preferably, the electrodialysers which respectively use Method I or Method II and Method III are combined, wherein the bipolar membrane electrodialysers which uses Method I or Method II and the bipolar membrane electrodialyser which uses Method III can be connected in series or in parallel, or in the combination of the above two.

In one of the second embodiment, the Method I and Method III can be used separately or in combination. In case of the combination of Method I and Method III, Method I and Method III can be carried out in different membrane units of the same bipolar membrane electrodialyser, or in different bipolar membrane electrodialysers. Preferably, the bipolar membrane electrodialyser which uses Method I and the bipolar membrane electrodialyser which uses Method III are combined, wherein the bipolar membrane electrodialyser which uses Method I and the bipolar membrane electrodialyser which uses Method III can be connected in series or in parallel, or the combination of the above two. Preferably, the bipolar membrane electrodialyser which uses Method I and the bipolar membrane electrodialyser which uses Method III are connected in series. More preferably, the bipolar membrane electrodialyser which uses Method I is located at the upstream of the bipolar membrane electrodialyser which uses Method III so that the desalted water discharged from the bipolar membrane electrodialyser which uses Method I can be further desalted as the feed water delivered into the feed liquid chamber of the bipolar membrane electrodialyser which uses Method III. A plurality of bipolar membrane electrodialysers which use Method I connected in series or in parallel can be connected in series with the bipolar membrane electrodialyser which uses Method III, wherein the number of the bipolar membrane electrodialyser which uses Method III can be more than one and the said electrodialysers can be connected in series and/or in parallel. The numbers of the bipolar membrane electrodialyser which uses Method I and of the bipolar membrane electrodialyser which uses Method III can be selected according to the processing load of the wastewater, without any specific limitation.

In the above two embodiments as described above, the first embodiment is a common electrodialysis while the second one is a bipolar membrane electrodialysis.

According to the wastewater treatment method of the present invention, the common electrodialysis can be combined with the said bipolar membrane electrodialysis. When the common electrodialysis is combined with the bipolar membrane electrodialysis, the common electrodialysis and the bipolar membrane electrodialysis can be connected in series or in parallel, or in combination of the above two. When the common electrodialysis and the bipolar membrane electrodialysis are connected in series, the common electrodialysis can be located at the upstream of the bipolar membrane electrodialysis, or at the downstream of the bipolar membrane electrodialysis.

In a preferable embodiment of the present invention, the electrodialysis comprises a common electrodialysis and a bipolar membrane electrodialysis.

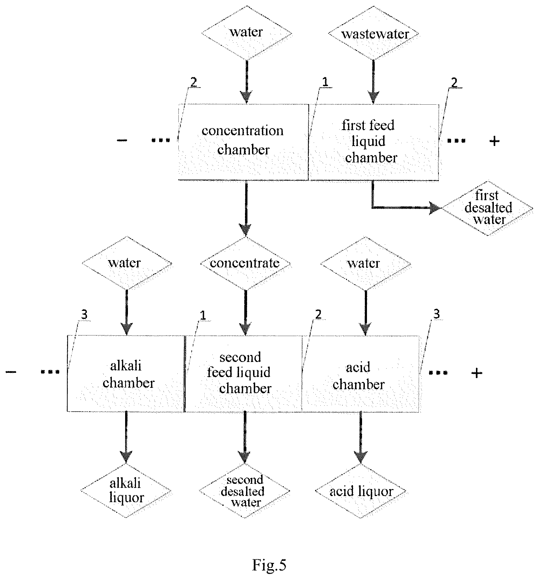

In the preferable embodiment, as shown in FIG.5, the membranes in the membrane unit of the common electrodialysis are cation exchange membrane 1 and anion exchange membrane 2; the anion exchange membrane 2 and cation exchange membrane 1 divide the internal space of the membrane unit into a feed liquid chamber (in the preferable embodiment it is called as the first feed liquid chamber) and a concentration chamber.

In the preferable embodiment, as shown in FIG.5, the membranes in the membrane unit of the bipolar membrane electrodialysis are bipolar membrane 3, anion exchange membrane 2 and cation exchange membrane 1; the bipolar membrane 3, anion exchange membrane 2 and cation exchange membrane 1 divide the internal space of the membrane unit into an acid chamber, a feed liquid chamber (in the preferable embodiment it is called as the second feed liquid chamber) and an alkali chamber; the second feed liquid chamber is located between the acid chamber and the alkali chamber.

In the preferable embodiment, the wastewater enters the first feed liquid chamber of the common electrodialysis for electrodialysis to produce a first desalted water (in the present text, the desalted water produced from the common electrodialysis is called as the first desalted water in the preferred embodiment for the sake of clarity), a concentrate containing an organic ammonium ion; the said concentrate is delivered into the second feed liquid chamber of the bipolar membrane electrodialysis for a bipolar membrane electrodialysis to produce a second desalted water (in the present text, the desalted water produced from the bipolar membrane electrodialysis is called as the second desalted water in the preferred embodiment for the sake of clarity), an acid liquor and an alkali liquor containing an organic ammonium ion.

According to the wastewater treatment method of the present invention, in the electrodialysis (including a common electrodialysis and a bipolar membrane electrodialysis) process, the anions through the anion exchange membrane are usually conventional inorganic ions and all kinds of anionic exchange membranes sufficient for the anions to pass through can be used. Specifically, the anionic exchange membrane can be both a heterogeneous anion exchange membrane and a homogeneous anion exchange membrane. For further improving the service life of the anion exchange membrane, the anion exchange membrane is preferably a homogeneous anion exchange membrane. The material of the anion exchange membrane can be a conventional selection without any specific limitation. For instance, it can be one of a styrene-type anion exchange membrane, a polysulfone-type anion exchange membrane, a poly(ether-ether-ketone) anion exchange membrane, and a perfluoroethylene sulfonic acid anion exchange membrane, or the combinations of two or more. According to the method of the invention, the specific parameters of the anion exchange membrane can be a conventionally selected without any specific limitation. For example, the ion exchange capacity of the anion exchange membrane can be a 0.5-5meq/g dry membrane, preferably a 1-4meq/g dry membrane, and more preferably as a 2-2.5meq/g dry membrane. The membrane surface resistance of the anion exchange membrane can be 1-15 Ω·cm², preferably 2-12 Ω·cm².

According to the wastewater treatment method of the present invention, the kind of the bipolar membrane used in bipolar membrane electrodialysis is not particularly limited so it can be conventionally selected. No more details are provided herein.

According to the wastewater treatment method of the present invention, the voltage applied to the membrane stack of the electrodialyser in the electrodialysis can be selected according to the method of the electrodialysis. In general, the voltage applied to each membrane unit can be 0.1-5V, preferably 0.5-4V, more preferably 1-3V for a common electrodialysis. The voltage applied to each membrane unit can be 0.1-8V, preferably 1-6V, more preferable to 2-5V for a bipolar membrane electrodialysis.

According to the wastewater treatment method of the present invention, the kind of the electrode liquid used in the anode chamber and the cathode chamber of the electrodialyser is not particularly limited in the electrodialysis so that it can be conventionally selected. In general, the electrode liquid can be obtained by dissolving at least one electrolyte in water. The electrolyte concentration can be conventionally selected. Generally it can be 0.1-50 wt.%, preferably 0.1-40 wt.%, more preferably 0.5-25 wt.%, further preferablyl-20 wt.%, even further preferably 2-10 wt.%, and especially preferably 2.5-5 wt.%. The electrolyte may be a variety of electrolytes commonly used in the field, such as inorganic electrolytes and/or organic electrolytes. Specifically, the electrolyte may be one or more selected from the group consisting of sodium sulfate, sodium nitrate, sodium phosphate, sodium hydrogen phosphate, sodium dihydrogen phosphate, potassium nitrate, potassium phosphate, potassium hydrogen phosphate, potassium dihydrogen phosphate, sodium hydroxide, potassium hydroxide, formic acid, acetic acid, sodium formate, potassium formate and organic ammonium electrolyte. The said organic ammonium electrolyte can be various water-soluble organic ammonium electrolytes, preferably one or more selected from the group consisting of tetramethyl ammonium chloride, tetramethylammonium bromide and tetramethylammonium hydroxide.

According to the wastewater treatment method of the present invention, the electrodialysis can be carried out at a conventional temperature. Generally, the said electrodialysis can be carried out at a temperature of 0-50°C, preferably 5-40°C, and more preferably 10-35°C. The duration of the electrodialysis can be selected according to the properties of the wastewater and the constitution of the expected desalted water without any specific limitation.

Wastewater containing an organic ammonium ion from various sources can be treated according to the wastewater treatment method of the present invention in order to obtain a concentrate containing an organic ammonium ion (alkali liquor) and reduce the COD of water so that it can meet the discharge standard and/or satisfy the requirements for recycling utilization at the same time. For example, when the wastewater treatment method according to the present invention is used for treating wastewater from the preparation of a molecular sieve by using organic ammonium hydroxide as the template, the recovered concentrate containing the organic ammonium ion (alkali liquor) can be recycled at least in part as the alkali source for the synthesis process of a molecular sieve; the desalted water can be used in the synthesis process as the reaction water, or as the water for termination of the crystallization in the crystallization step, or as washing water.

According to the wastewater treatment method of the present invention, the organic ammonium ion content in the desalted water can be selected according to the expected application occasion of the desalted water. Specifically, in case that the method of the present invention is used for treating wastewater from the preparation of a molecular sieve wherein the produced desalted water is reused in the synthetic process, the crystallization process and the washing process of a molecular sieve, the concentration of the organic ammonium ion in the produced desalted water is preferably 2000mg/L or less, more preferably 1700mg/L or less, further preferably 1000mg/L or less, even further preferably 550mg/L or less and particularly preferably 500mg/L or less, such as 450mg/L or less, or even 400mg/L or less. The wastewater treatment method of the present invention can obtain the desalted water having the above organic ammonium ion content in a shorter electrodialysis time.

The wastewater treatment method of the present invention preferably comprises a step of wastewater pretreatment. In the pretreatment step, the wastewater is subjected to a solid-liquid separation to obtain a solid phase and a liquid phase; the said liquid phase is delivered to the wastewater treatment step for electrodialysis. More preferably, the wastewater is contacted with at least one precipitant prior to the solid-liquid separation so that the silicon in the wastewater can form a colloid, wherein the precipitant is preferably selected from the group consisting of acid, divalent, trivalent and tetravalent metal salts, more preferably tetravalent metal salts, such as titanium tetrachloride and titanyl sulfate, etc. The titanium tetrachloride and titanyl sulfate have more advantages of obtaining desalted water having a reduced silicon content.

According to the second aspect of the present invention, the present invention also provides a wastewater treatment system, wherein the wastewater is the wastewater containing an organic ammonium ion from the preparation of a molecular sieve. The said system comprises a wastewater storage unit, an optional pretreatment unit, a common electrodialysis unit and/or a bipolar membrane electrodialysis unit.

The wastewater storage unit is used for receiving and storing wastewater. The wastewater storage unit can use a hollow container, such as a common tank, for receiving and storing wastewater.

The wastewater treatment system according to the present invention preferably comprises the pretreatment unit for contacting the wastewater from the wastewater storage unit with at least one precipitant, so that the silicon in the wastewater forms a colloid. Then after a solid-liquid separation a liquid phase and a solid phase are obtained. The said precipitant can be selected from AlCl₃, polyaluminium chloride, acid and alkali. In one embodiment, the precipitant is selected from acid, divalent, trivalent and tetravalent metal salts, preferably tetravalent metal salts, such as titanium tetrachloride and titanyl sulfate, etc. The titanium tetrachloride and titanyl sulfate have more advantages in obtaining desalted water having a reduced silicon content.

The preprocessing unit may comprise a reactor for contacting the wastewater with the precipitant for reaction.

The pretreatment unit can also comprise a conventional solid-liquid separation device, such as a filter device, a centrifugal device or a combination of two or more separation devices, preferably comprising a filter device. The filter device can employ a variety of common filter media, for example, one selected from a fabric, a porous material, a solid particle layer and a porous membrane, or the combinations of two or more of the above. The said porous membrane can be an organic membrane or an inorganic membrane or a combination of two or more kinds of porous membranes. The said inorganic membrane can be a ceramic membrane and/or a metal film; the organic membrane can be a hollow fiber membrane. Preferably, a porous membrane is used as the filter medium. More preferably, an ultrafiltration membrane is used as the filter medium.

According to the wastewater treatment system of the present invention, the pretreatment unit is for reducing of the content of substances which can form precipitates (such as silicon) and/or solid substances in the wastewater to avoid that these substances form fouling on the surface of the ion exchange membrane and/or the bipolar membrane in the electrodialysis process, wherein the fouling influences the electrodialysis effect and shortens the service life of the ion exchange membrane. A person skilled in the art can understand that it is possible to omit the pretreatment unit when the substances which can form precipitates and the solid substances have a low content in the wastewater and no significant effect is produced on the electrodialysis.

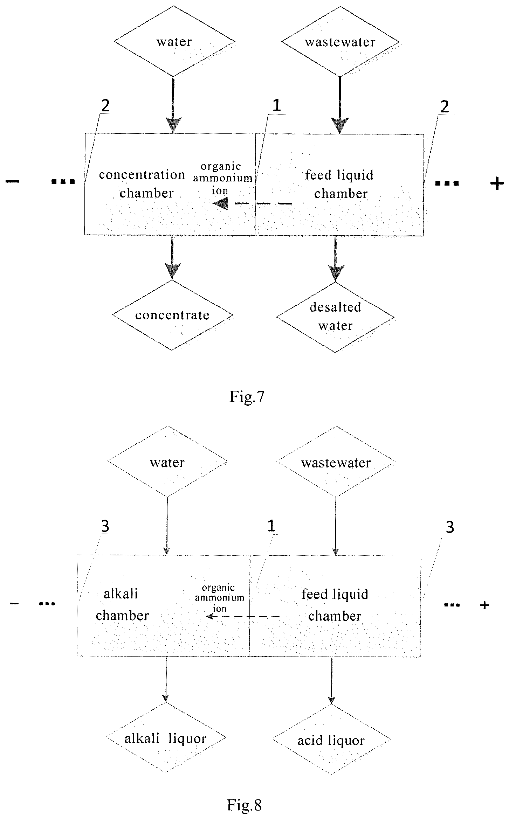

The common electrodialysis unit is used for carrying out a common electrodialysis on the wastewater or the liquid phase discharged from the pretreatment unit to obtain a first desalted water having a reduced content of organic ammonium ion and a concentrate containing an organic ammonium ion. The electrodialyser used in the common electrodialysis unit carries out electrodialysis on the liquid phase discharged from the solid-liquid separation unit. As shown in FIG. 7, the common electrodialysis is carried out in a common electrodialyser, wherein the membrane stack of the common electrodialyser has at least one membrane unit; the membranes of at least a part of the membrane unit are a cation exchange membrane 1 and anion exchange membrane 2; the cation exchange membrane 1 and the anion exchange membrane 2 divide the internal space of the membrane unit into a feed liquid chamber and a concentration chamber.

In the performance of common electrodialysis, the wastewater or the liquid phase produced from the pretreatment unit enters the feed liquid chamber and water (which can be deionized water and/or desalted water) enters the concentration chamber. The organic ammonium ion and other cations obtained from the wastewater or the liquid phase produced from the pretreatment unit enter the concentration chamber through cation exchange membrane 1 under the action of the electric field. In the meanwhile, the anions in the wastewater or the liquid phase produced from the pretreatment unit enter the concentration chamber on the other side through anion exchange membrane 2 (not exhibited in FIG.7) so that first desalted water having a reduced content of organic ammonium ion and a concentrate enriched in the organic ammonium ion are obtained at the same time.

In the common electrodialysis, the voltage applied to each membrane unit is generally within the range of 0.1-5V, preferably in the range of 0.5-4V, more preferably in the range of 1-3V, for example, in the range of 1.5-3V.

The organic ammonium ion content in the first desalted water obtained from the common electrodialysis can be selected according to the expected use of the first desalted water. Specifically, when the first desalted water is recycled in the molecular sieve synthesis process, the weight content of the organic ammonium ion in the first desalted water is preferably 2000ppm or less, more preferably 1000mg/L or less and further more preferably 600 ppm or less.

The concentrate obtained from the above common electrodialysis is subjected to a bipolar membrane electrodialysis to produce an acid liquor, an alkali liquor containing an organic ammonium ion and an optional second desalted water.

The bipolar membrane electrodialysis unit is used for carrying out a bipolar membrane electrodialysis on the concentrate discharged from the common electrodialysis unit to obtain an acid liquor, an alkali liquor containing an organic ammonium ion and an optional second desalted water. The bipolar membrane electrodialyser used in the bipolar membrane electrodialysis unit carries out a bipolar membrane electrodialysis on the concentrate discharged from the common electrodialysis unit. The bipolar membrane electrodialysis can be carried out in a dual-chamber bipolar membrane electrodialyser or a triple-chamber bipolar membrane electrodialyser, or in both a dual-chamber bipolar membrane electrodialyser and a triple-chamber bipolar membrane electrodialyser.

In particular, the bipolar membrane electrodialysis can be carried out in one, two, or three of the following methods. In the invention, in the bipolar membrane electrodialysis, the chamber for receiving the cations which penetrate the cation exchange membrane is called as an alkali chamber; the cationic concentrate discharged from the alkali chamber is called as an alkali liquor; the chamber for receiving the anions which penetrate the anion exchange membrane is called as an acid chamber; the cationic concentrate discharged from the acid chamber is called as an acid liquor
Method 1: the membrane stack of the electrodialyser has at least one membrane unit. As shown in FIG. 8, the membranes in at least a part of the membrane unit are bipolar membrane 3 and cation exchange membrane 1; the bipolar membrane 3 and cation exchange membrane 1 divide the internal space of the membrane unit into an alkali chamber and a feed liquid chamber. The concentrate obtained from the common electrodialysis enters the feed liquid chamber and water (which can be deionized water and/or desalted water obtained from electrodialysis) enters the alkali chamber. In the bipolar membrane electrodialysis process, an acid liquor is obtained from the feed liquid chamber and an alkali liquor containing an organic ammonium ion is obtained from the alkali chamber.
Method 2: the membrane stack of the electrodialyser has at least one membrane unit. As shown in FIG. 9, the membranes in at least in part of the membrane unit are bipolar membrane 3 and anion exchange membrane 2; the bipolar membrane 3 and the anion exchange membrane 2 divide the internal space of the membrane unit into an acid chamber and a feed liquid chamber. The concentrate obtained from the common electrodialysis enters the feed liquid chamber and water (which can be deionized water and/or desalted water obtained from electrodialysis) enters the acid chamber. In the bipolar membrane electrodialysis process, an alkali liquor containing an organic ammonium ion is obtained from the feed liquid chamber and an acid liquor is obtained from the acid chamber.
Method 3: the membrane stack of the electrodialyser has at least one membrane unit. As shown in FIG. 10, the membranes in at least a part of the membrane unit are bipolar membrane 3, anion exchange membrane 2 and cation exchange membrane 1; the bipolar membrane 3, anion exchange membrane 2 and cation exchange membrane 1 divide the internal space of the membrane unit into an acid chamber, a feed liquid chamber and an alkali chamber; the liquid chamber is located between the acid chamber and the alkali chamber. The concentrate obtained from the common electrodialysis enters the feed liquid chamber and water (which can be deionized water and/or desalted water obtained from electrodialysis) enters the acid chamber and the alkali chamber respectively. In the electrodialysis process, an acid liquor is obtained from the acid chamber; an alkali liquor containing an organic ammonium ion is obtained from the alkali chamber; a second desalted water is optionally obtained from feed liquid chamber.

The Method 1, Method 2 and Method 3 can be used separately or in combination. In case of the preferable combination of Method 1 or Method 2 with Method 3, Method 1 or Method 2 and Method 3 can be carried out in different membrane units of the same bipolar membrane electrodialyser, or carried out in different bipolar membrane electrodialysers. Preferably, the bipolar membrane electrodialysers which respectively use Method 1 or Method 2 and Method 3 are combined, wherein the bipolar membrane electrodialysers which use Method 1 or Method 2 and the bipolar membrane electrodialyser which uses Method 3 can be connected in series or in parallel, or in the combination of the above two.

In the present invention, the connection in series refers to a flow path of a fluid formed by an end-to-end connection of more than one bipolar membrane electrodialysers. The desalted water discharged from the upstream electrodialyser enters the downstream bipolar membrane electrodialyser which is directly connected thereto to continue the bipolar membrane electrodialysis so as to achieve a multistage bipolar membrane electrodialysis. In the present invention, the connection in parallel means a tributary form formed by more than one bipolar membrane electrodialysers which have the same feeding water source, wherein the electrodialysers have no stream connection each other but the same source. Hence, a multi-machine parallel processing can be achieved and the processing load of the device is increased. In the present invention, the combination of connection in series and connection in parallel refers to that when a plurality of electrodialysers are used in combination, the connection in parallel is mixed with the connection in series. As an example of the combination of the connection in series and the connection in parallel, multiple groups of bipolar membrane electrodialysers can be set wherein each group is connected in parallel while a connection in series is adopted inside each group. In this way, a multistage bipolar membrane electrodialysis can be achieved and a higher processing load can be obtained.

Preferably, the bipolar membrane electrodialysis is carried out in Method 3 as the above, which not only can recover the organic ammonium hydroxide but also can obtain an acid liquor at the same time. The said acid liquor can be recycled.

In the wastewater treatment system according to the second aspect of the present invention, the cation exchange membrane used in the common electrodialysis unit and the bipolar membrane electrodialysis unit can be a heterogeneous or homogeneous cation exchange membrane, preferably a styrene-type homogeneous cation exchange membrane. The said styrene-type homogeneous cation exchange membrane has been specified in details as the above. No more details are provided herein.

In the wastewater treatment system according to the present invention, each of the common electrodialyser and the bipolar membrane electrodialyser preferably comprises at least one voltage regulating element and at least one current detection element. The said current detection element is used for detecting the current intensity in the common electrodialyser and the bipolar membrane electrodialyser. The voltage regulating unit is used for regulating the voltage according to the current intensity measured by the current detection element, so that the current density is within the range of processing requirements, for example, within the value range as mentioned above. The method of controlling the current density by regulating the voltage according to the magnitude of the detected current intensity is known in this art. No more details are provided herein.

The wastewater treatment system according to the present invention preferably further comprises a first cycle unit and/or a second cycle unit; said first cycle unit is used for delivering the acid liquor discharged from the bipolar membrane electrodialysis unit into the pretreatment unit at least in part as a precipitant; said second cycle unit is used for delivering the
first desalted water and/or the second desalted water into the common electrodialysis unit and/or the bipolar membrane electrodialysis unit as water for the common electrodialysis and/or the bipolar membrane electrodialysis. The acid liquor can be directly delivered to the pretreatment unit or can be used in the pretreatment unit after concentration and/or dilution.

According to the third aspect of the present invention, the invention provides a method for preparing a molecular sieve, comprising a synthetic step, a crystallization step, a separation and washing step and a wastewater treatment step.

In the synthesis step, the raw material is contacted with water for reaction; the raw material contains a silicon source, an organic ammonium hydroxide and an optional titanium source.

The present invention does not particularly limit the kind of silicon source so that it can be a conventional selection, for example, it can be a silica sol and/or an organosilicon compound. The organosilicon compound can be various silicon-containing compounds which can form silica under the conditions of hydrolysis and condensation. Specifically, the organosilicon source may be one or more selected from the silicon-containing compounds represented by formula III.

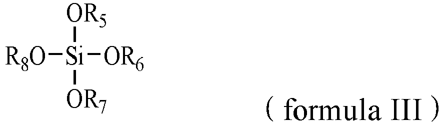

In formula III, R₅, R₆, R₇ and R₈ are independently C₁-C₄ alkyl, including C₁-C₄ linear alkyl and C₃-C₄ branched alkyl. For example, R₅, R₆, R₇ and R₈ are independently methyl, ethyl, n-propyl, isopropyl, n-butyl, sec-butyl, isobutyl or tert-butyl.

Specifically, the organosilicon source can be one or more selected from the group consisting of tetramethyl orthosilicate, tetraethyl orthosilicate, tetran-propyl orthosilicate and tetrabutyl orthosilicate.

The said material can also comprise other substances such as a titanium source acording to the type of molecular sieve prepared. The titanium source can be a conventional selection without any specific limitation. For example, the titanium source can be an inorganic titanium salt and/or an organic titanate, preferably organic titanate. The inorganic titanium salt can be TiCl₄, Ti (SO₄) ₂ or TiOCl₂; the organic titanate can be a compound represented by formula R⁹₄TiO₄, wherein R⁹ is C₁-C₆ alkyl, preferably C₂-C₄ alkyl.

The organic ammonium hydroxide may be an organic ammonium hydroxide suitable as a structural directing agent for a molecular sieve. Specifically, the organic ammonium hydroxide is selected from the compound represented by formula II,

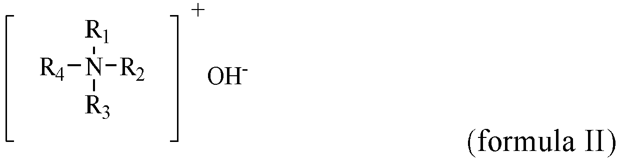

In formula II, R₁, R₂, R₃ and R₄ are independently selected from C₁-C₅ alkyl, and C₆₋C₁₂ aryl. The C₁-C₅ alkyl includes C₁-C₅ linear alkyl and C₃-C₅ branched alkyl. The specific examples include methyl, ethyl, n-propyl, isopropyl, n-butyl, sec-butyl, isobutyl, tert-butyl, n-amyl, isoamyl, tert-amyl and neo-amyl. Specific examples of the C₆-C₁₂ aryl include but are not limited to: phenyl, naphthyl, 4-methylphenyl, 2-methylphenyl, 3-methylphenyl, 4-ethylphenyl, 2- ethylphenyl and 3- ethylphenyl.

Preferably, the organic ammonium hydroxide is tetramethylammonium hydroxide, tetraethylammonium hydroxide, tetrapropylammonium hydroxide and tetrabutylammonium hydroxide. As a more preferred example, the organic ammonium hydroxide is tetrapropylammonium hydroxide.

The proportion of said silicon source, organic ammonium hydroxide, optional titanium source and water which is determined according to the specific kind of the molecular sieve can be a conventional selection. No more details are provided herein.

In the crystallization step, the reaction mixture obtained from the synthesis step is crystallized. The crystallization can be carried out under conventional conditions. Generally, the crystallization treatment can be carried out in a closed environment. The temperature of the crystallization treatment can be 110°C -180 °C. The crystallization treatment time can be 6-72 hours.

According to the method for the preparation of a molecular sieve of the present invention, the molecular sieve can also be prepared according to known conditions in the art as long as an organic ammonium compound (generally regarded as organic ammonium hydroxide) is used in the preparation of the molecular sieve, for example, the methods for the preparation of molecular sieves as disclosed in CN1167082A, CN1239015A and CN1239016A.

In the separation and washing step, the mixture obtained from the crystallization step is subjected to a solid-liquid separation to produce a solid phase and a crystallization mother liquor; the solid phase is washed to obtain a molecular sieve and washing wastewater. The solid-liquid separation method can be a conventional selection, such as filtration, centrifugation or a combination of two or more separation methods. Preferably, the mixture obtained from the crystallization step is separated in a filtration method. A variety of common filter media can be used in the filtration, for example, one selected from a fabric, a porous material, a solid particle layer and a porous membrane, or a combination of two or more of the above. The said porous membrane can be an organic membrane, an inorganic membrane or a combination of two or more kinds of porous membranes. The said inorganic membrane can be a ceramic membrane and/or a metal membrane; the organic membrane can be a hollow fiber membrane. Preferably, a fabric is used as the filter medium. The said filtration can be carried out in a common filter device, such as a plate and frame filter and a belt filter.

In the wastewater treatment process, the wastewater is subjected to electrodialysis to produce a concentrate containing an organic ammonium ion and desalted water. The said wastewater is the said crystallization mother liquor and/or the said washing wastewater, wherein the method according to the first aspect of the present invention is employed for the electrodialysis of the wastewater, preferably the electrodialysis as depicted in combination with FIG.4 and FIG.5, particularly preferably the electrodialysis as depicted in combination with FIG. 5.

Prior to electrodialysis of the wastewater through the method according to the first aspect of the invention, the wastewater is preferably pretreated to remove suspended matters and silicon element in the wastewater. The pretreatment method can be a conventional method. For example, at least one precipitant can be added to the wastewater so that the silicon element in the wastewater can form a colloid and then precipitate. Thereby the silicon in the wastewater is recovered (the recovered silicon can be recycled into the synthetic process as a silicon source). The said precipitant can be selected from AlCl₃, polyaluminium chloride, acid and alkali. In one embodiment, the precipitant comprises acid, divalent, trivalent and tetravalent metal salts, preferably tetravalent metal salts, such as titanium tetrachloride and titanyl sulfate, etc. Therein titanium tetrachloride and titanyl sulfate have more advantages in obtaining desalted water having a reduced silicon content. The alkali is preferably an inorganic alkali, more preferably selected from alkali hydroxide and aqueous ammonia, and further preferably selected from sodium hydroxide, potassium hydroxide and aqueous ammonia, and most preferably sodium hydroxide. The alkali is preferably provided in the form of an aqueous solution, wherein the concentration of the alkaline aqueous solution is not particularly limited and thus can be conventional according to the specific kind of the alkali. For improving the filtration performance, a flocculant and/or a filter aid can be further added to improve the filtration performance of silicon colloid.

In a preferred embodiment of the present invention, at least one acid is added to the wastewater so that a solid-liquid separation can be carried out after the silicon in the wastewater forms a colloid and precipitate. Thereby the wastewater is pretreated.

Silicon colloid is a material difficult to be filtered. In case of filtration using a plate and frame filter, the phenomenon such as penetrating filtration or filter cloth blockage easily happens. Therefore, a flocculant and/or a filter aid is generally used. Compared with the use of AlCl₃ and polyaluminum chloride, on the one hand, the use of an acid can enable the silicon colloid which is formed to possess a better filtration performance so that the need for the flocculant and the filter aid is omitted. On the other hand, it can also reach a higher silicon precipitation rate and thereby achieves a higher silicon recovery.

The acid is preferably an inorganic acid. The specific examples may include but are not limited to hydrochloric acid, sulfuric acid, nitric acid and phosphoric acid. Preferably, the acid is sulfuric acid and/or hydrochloric acid. The acid is provided in the form of an aqueous solution, the concentration of which is not particularly limited. It can be a conventional concentration according to the specific kind of acid.

The specific amount of the acid can be selected according to the kind of acid and the properties of the wastewater to meet the requirement of the formation of a colloid by the silicon in the wastewater. In general, the amount of the acid keeps the pH of the wastewater within the range of 5-8, preferably within the range of 6-7.

The wastewater is contacted with at least one acid for a period sufficient to make most of the silicon in the wastewater form a colloid. Generally, the contact period can be 5-24 hours. The wastewater is contacted with at least one acid at a temperature of 10-95°C, preferably 40-85°C. In the practical operation process, the wastewater can stand for 5-24 hours at a temperature of 0-95°C, preferably 40-85°C after being evenly mixed with the acid in order to obtain a better solid-liquid separation effect.

The solid-liquid separation method in the pretreatment can be a conventional selection, such as filtration, centrifugation or a combination of two or more separation methods, preferably a filtration method for separating the mixture containing a colloid. A variety of common filter media can be used in the filtration, for example, one selected from a fabric, a porous material, a solid particle layer and a porous membrane, or a combination of two or more of the above. The said porous membrane can be an organic membrane, an inorganic membrane or a combination of two or more kinds of porous membranes. The said inorganic membrane can be a ceramic membrane and/or a metal membrane; the organic membrane can be a hollow fiber membrane. Preferably, the filter medium is a porous membrane. More preferably, the filter medium is an ultrafiltration membrane.

When a molecular sieve is prepared by the method of the present invention, a small amount of wastewater is generated or basically no wastewater is discharged. In the meanwhile, the organic ammonium hydroxide as the template and water can be recycled, which achieves the effective reuse of the wastewater. In particular, the recycling of each component in the wastewater can be achieved when the the electrodialysis as depicted in FIG.4 and FIG. 5 is adopted.

The method for the preparation of a molecular sieve of the present invention preferably comprises one, two or three of the first cyclic step, the second cyclic step and the third cyclic step.

In the first cyclic step, the desalted water is recycled in the following steps: as water for synthesis in the synthesis step; for termination of the crystallization in the crystallization step; as the washing water in the separation and washing step. The desalted water obtained from electrodialysis can be directly recycled.

In the second cyclic step, the alkali liquor containing organic ammonium hydroxide obtained from electrodialysis is recycled in the synthesis step.

In the third cyclic step, the acid liquor obtained in the presence of bipolar membrane electrodialysis is recycled in the pretreatment step at least as a precipitant.

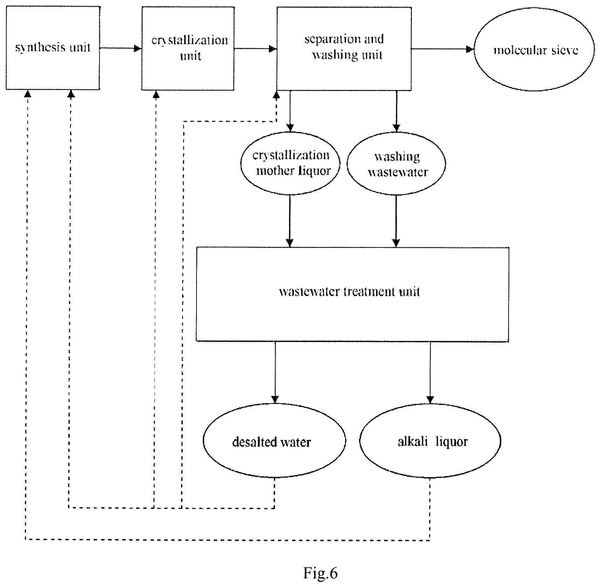

According to method of the fourth aspect of the present invention, the present invention provides a molecular sieve preparation system. As shown in FIG.6, the system comprises a synthesis unit, a crystallization unit, a separation and washing unit and a wastewater treatment unit.

The synthetic unit is used for contacting the raw material with water for reaction, wherein the raw material contains a silicon source, an organic ammonium hydroxide and an optional titanium source. The synthetic unit may use various synthetic reactors common in the art without any particular limitation.

The crystallizing unit is used for crystallizing the reaction mixture obtained from the synthesis step. The crystallizing reactor can be a conventional selection, such as a crystallization kettle that can withstand a internal pressure.

The separation and washing unit is used for the solid-liquid separation of the mixture obtained from the crystallization step to produce a solid phase and a crystallization mother liquor. The solid phase is washed to obtain a molecular sieve and washing wastewater. A variety of common filter media can be used in the separation and washing unit, for example, one selected from a fabric, a porous material, a solid particle layer and a porous membrane, or a combination of two or more of the above. The said porous membrane can be an organic membrane, an inorganic membrane or a combination of two or more kinds of porous membranes. The said inorganic membrane can be a ceramic membrane and/or a metal membrane. The organic membrane can be a hollow fiber membrane. Preferably, a fabric is used as the filter medium. The separation and washing unit can employ a conventional solid-liquid separation device, such as a plate and frame filter and a belt filter.

As shown in FIG.6, the wastewater treatment unit is used for electrodialysis of the wastewater to produce an alkali liquor and desalted water containing an organic ammonium ion, wherein the wastewater is the said crystallization mother liquor, the said washing wastewater or the mixture of the said crystallization mother liquor and the said washing water. Therein the said electrodialysis is carried out in at least one of the electrodialysers. The membrane stack of the said electrodialyser has at least one membrane unit. The membranes in at least a part of the membrane unit comprise a cation exchange membrane which is preferably a styrene-type homogeneous cation exchange membrane. The cation exchange membrane has been specified in the above text. No more details are provided herein.

The assembling form of the membrane unit of the electrodialyser can be a conventional selection, such as a combination of one or more of the membrane units according to the FIG.2 to FIG. 5 as in the above text. The electrodialyser can be one electrodialyser or a combination of two or more kinds of electrodialysers, for example, a combination of a common electrodialyser and a bipolar membrane electrodialyser (as previously described), preferably the embodiments as above depicted in combination with FIG.4 and FIG.5, more preferably the embodiment as above depicted in combination with FIG. 5.

According to the molecular sieve preparation system of the present invention, the wastewater treatment unit can also comprise current detecting elements and voltage regulating elements, wherein the current detecting elements are used for detecting the current intensity in the electrodialysis process while the voltage regulating elements are used for regulating the voltage applied to each membrane unit according to the current intensity measured by the current detection elements, so that the current density can satisfy the requirements, for example, the value range as mentioned above. The numbers of the current detecting elements and voltage regulating elements can be selected according to the number of the electrodialysers so as to insure that the current density within each electrodialyser can all satisfy the requirements, for example, based on the value range as mentioned above.

As shown in FIG. 6, the recovered concentrate containing an organic ammonium ion (especially the alkali liquor obtained from the bipolar membrane electrodialysis) and the desalted water can be recycled according to the molecular sieve preparation system of the present invention. Therefore, according to the molecular sieve preparation system of the present invention, the wastewater treatment unit preferably further comprises a delivery pipeline for desalted water and/or a delivery pipeline for recovering organic ammonium hydroxide. The delivery pipeline for desalted water is used for one, two or three purposes selected from the following: delivering the desalted water recovered by the wastewater treatment unit into the synthesis unit (as water for synthesis), the crystallization unit (for termination of the crystallization) and the separation and washing unit (as the washing water). The said delivery pipeline for recovering organic ammonium hydroxide is used for delivering the alkali liquor containing organic ammonium hydroxide obtained from the bipolar membrane electrodialysis in the wastewater treatment unit into the synthesis unit.

The molecular sieve preparation system of the present invention preferably further comprises a pretreatment unit for pretreating the wastewater to remove silicon in the wastewater. The said pretreatment unit can be carried out based on the pretreatment method according to the section of the method for the preparation of a molecular sieve as above. The silicon-containing solid discharged from the pretreatment unit can be recycled into the synthesis unit as a silicon source. The liquid phase discharged from the pretreatment unit enters the wastewater treatment unit for treatment. When the system for the preparation of a molecular sieve according to the present invention also comprises the said pretreatment unit, the system preferably further comprises a delivery pipeline for recovering an acid liquor, wherein the said delivery pipeline for recovering acid liquor is used for delivering the acid liquor produced from the bipolar membrane electrodialyser in the wastewater treatment unit into the pretreatment unit at least in part as a precipitant.

The use of the molecular sieve preparation system of the present invention for preparing a molecular sieve can effectively treat the wastewater produced in the preparation of the molecular sieve, recover the template, and also obtain a high water recovery and utilization rate with little influence on the environment.

According to the method of the fifth aspect of the invention, the present invention provides another wastewater treatment system.

The said another wastewater treatment system according to the invention comprises a delivery pipeline for desalted water and/or a delivery pipeline for recovering organic ammonium hydroxide. The said delivery pipeline for desalted water is used for delivering the desalted water (which can be the first desalted water and/or the second desalted water) recovered from the wastewater treatment unit into one, two or three of the following units: as water for synthesis in the synthetic unit in the molecular sieve preparation; for termination of the crystallization in the crystallization unit in the molecular sieve preparation; as the washing water in the separation and washing unit in the molecular sieve preparation. The said delivery pipeline for recovering organic ammonium hydroxide is used for delivering the organic ammonium hydroxide recovered from the wastewater treatment unit into the synthetic unit.

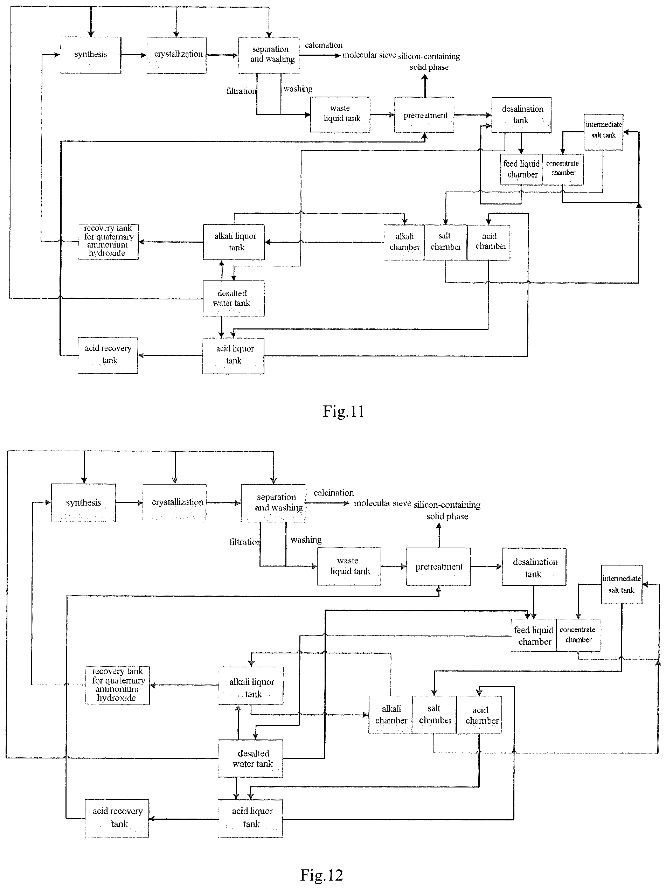

FIG.11 shows a preferable embodiment for the treatment of wastewater from the preparation of a molecular sieve of the present invention. In the embodiment of FIG. 11, the wastewater treatment system comprises a desalination tank, an intermediate salt tank, a common electrodialyser, a bipolar membrane electrodialyser, an alkali liquor tank, an acid liquor tank.

The membranes in the membrane unit of said common electrodialyser are a cation exchange membrane and an anion exchange membrane; the cation exchange membrane and anion exchange membrane divide the internal space of the membrane unit into a feed liquid chamber and a concentration chamber (referred to as the concentrate chamber in FIG. 11). The membranes in the membrane unit of the bipolar membrane electrodialyser are a bipolar membrane, a cation exchange membrane and an anion exchange membrane; the bipolar membrane, the cation exchange membrane and the anion exchange membrane divide the internal space of the membrane unit into a feed liquid chamber (referred to as the salt chamber in FIG. 11), an acid chamber and an alkali chamber; the liquid chamber is located between the acid chamber and the alkali chamber.

The desalination tank which is used for receiving wastewater is communicated with the feed liquid chamber of the electrodialyser in the said common electrodialysis unit, and provides feed water to the feed liquid chamber and receives the effluent from the feed liquid chamber. That is, the desalination tank and the feed liquid chamber of the common electrodialyser form a liquid pathway in the common electrodialysis. The intermediate salt tank which is communicated with the concentration chamber of the common electrodialyser provides feed water to the concentration chamber and receives the effluent from the concentration chamber. The feed liquid chamber of the bipolar membrane electrodialyser is communicated with the said intermediate salt tank to receive the concentrate discharged from the intermediate salt tank as the feed water. That is, the intermediate salt tank forms two liquid pathways respectively with the concentration chamber of the common electrodialyser and the feed liquid chamber of the bipolar membrane electrodialyser in the common electrodialysis and the bipolar membrane electrodialysis. the said alkali liquor tank is communicated with the alkali chamber of the bipolar membrane electrodialyser for receiving the alkali liquor discharged from the alkali chamber of the bipolar membrane electrodialyser and provides feed water to the alkali chamber of the bipolar membrane electrodialyser. That is, the alkali liquor tank forms a liquid pathway with the alkali chamber of the bipolar membrane electrodialyser in the bipolar membrane electrodialysis. The said acid liquor tank is communicated with the acid chamber of the bipolar membrane electrodialyser for receiving the acid liquor discharged from the acid chamber of the bipolar membrane electrodialyser and provides feed water to the acid chamber of the bipolar membrane electrodialyser. That is, the acid liquor tank forms a liquid pathway with the acid chamber of the bipolar membrane electrodialyser in the bipolar membrane electrodialysis.

Preferably, as shown in FIG. 11, the system also comprises a pretreatment unit which is located at the upstream of the desalination tank for contacting the wastewater optionally with at least one precipitant so that a solid-liquid separation can be carried out after the silicon in the wastewater forms a colloid. The liquid phase produced from the solid-liquid separation is delivered to the desalination tank; the silicon-containing solid phase which is separated can serve as the silicon source in the synthesis unit. The precipitable substances (such as silicon) and suspended solids in the wastewater can be removed to further improve the effect of the electrodialysis and the bipolar membrane electrodialysis and thereby further prolong the service life of the membranes in the electrodialyser and the bipolar membrane electrodialyser by setting a pretreatment unit.

Preferably, as shown in FIG. 11, the system further comprises an organic ammonium hydroxide recovery tank, an acid recovery tank and a desalted water recovery tank. The said organic ammonium hydroxide recovery tank is used for receiving the alkali liquor discharged from the alkali liquor tank; the said acid recovery tank is used for receiving the acid liquor discharged from the acid liquor tank; and the said desalted water recovery tank is used for receiving the desalted water discharged from the desalination tank.

Preferably, as shown in FIG. 11, the said acid recovery tank is communicated with the pretreatment unit for delivering at least a part of the acid liquor into the said pretreatment unit as a precipitant.

Preferably, as shown in FIG. 11, the said desalted water tank is communicated with one, two or three of the following units: the said synthesis unit for providing water for synthesis to the synthesis unit; the said crystallization unit for providing water for termination of the crystallization to the crystallization unit; the said separation and washing unit for providing washing water to the separation and washing unit.

Preferably, as shown in FIG. 11, the alkali recovery tank is communicated with the synthesis unit of the molecular sieve for delivering the alkali liquor containing organic ammonium hydroxide into the synthesis unit as the raw material for the synthesis of the molecular sieve.

The following process can be used when the liquid phase discharged from the pretreatment unit is treated according to the embodiment shown in FIG. 11. The wastewater or the liquid phase discharged from the pretreatment unit is delivered into the desalination tank and water, which can be deionized water and/or desalted water produced from the previous electrodialysis, is delivered into the intermediate salt tank, the alkali liquor tank and the acid liquor tank. The feed water to the common electrodialyser and the bipolar membrane electrodialyser is activated and regulated to a predetermined flow; the common electrodialyser and the bipolar membrane electrodialyser are switched on for common electrodialysis and bipolar membrane electrodialysis treatment; the constitution of the water in the desalination tank is monitored. Once the constitution satisfies the requirements, the electrodialysis is stopped for discharging. Upon discharging, the first desalted water in the desalination tank is delivered into the desalination recovery tank; the alkali liquor in the alkali liquor tank is delivered into the alkali recovery tank and the acid liquor in the acid liquor tank is delivered into the acid recovery tank. Upon completion of discharging, the next batch of wastewater to be treated is delivered to the desalination tank and treated according to the above operation.

FIG.12 shows another preferable embodiment according to the molecular sieve preparation system and the molecular sieve preparation method of the present invention. The difference between the embodiment of FIG. 12 and the embodiment of FIG. 11 lies in: in the embodiment of FIG. 12, the desalination tank only provides feed water to the feed liquid chamber of the common electrodialyser and provides supplements during the electrodialysis process. The effluent from the feed liquid chamber of the common electrodialyser directly enters into the desalted water tank. A plurality of bipolar electrodialysers are preferred in the embodiment of FIG. 12, wherein at least a part of the electrodialysers are connected in series so that the wastewater or liquid phase from the pretreatment unit can be subjected to a multistage electrodialysis. Therefore, desalted water having a lower organic ammonium ion content is obtained.

This invention is explained in details as below in combination with examples, which however does not limit the protection scope of the present invention.

In the following examples and comparative examples, the organic ammonium ion content in the wastewater and desalted water is determined by the titration method and the COD value of water is determined by the potassium dichromate method. The content of the other ions in the wastewater and desalted water is determined by the method of inductively coupled plasma (ICP).

In the following examples and comparative examples, the current intensity in the electrodialysis is determined using a current meter.

### Example 1

The washing wastewater from the production of titanium silicate molecular sieve TS-1 was treated in the present example. The COD value and constitution of the wastewater are listed in Table 1. Prior to electrodialysis, the wastewater was treated with hydrochloric acid having a concentration of 3 wt% so that the pH value of the wastewater was regulated to 6.6. After that, the temperature of the wastewater was raised to 55 °C and the stirring was stopped. After standing for 12 hours at 55 °C, it was filtered with an ultrafiltration membrane having a pore size of 50nm. Then the liquid phase was collected for electrodialysis.

The method as depicted in FIG.2 was used in the present example for electrodialysis. The cation exchange membrane used herein was a styrene-type homogeneous cation exchange membrane purchased from Hebei Guangya Company (with an ion exchange capacity of 2.51meq/g dry membrane and membrane surface resistance (25°C, 0.1mol/L NaCl aqueous solution, the same below) of 4.59Ω·cm²); the anion exchange membrane used herein was a homogeneous styrene-type anion exchange membrane purchased from Hebei Guangya Company (with an ion exchange capacity of 2.45meq/g dry membrane and membrane surface resistance of 9.46Ω·cm²). The electrodialyser (the size of the membrane stack being 200 x 400mm) had 12 membrane units in total.

The electrode liquid used in the present example was a Na₂SO₄ aqueous solution of 3 wt%.

The wastewater was delivered into the feed liquid chamber of the electrodialyser. Wastewater, deionized water and the electrode liquid were respectively delivered to the feed liquid chamber, the concentration chamber and the electrode chamber of the electrodialyser. When the wastewater and the deionized water had a stable flow of 70L/h and the electrode liquid had a stable flow of 70L/h, the DC power was turned on for electrodialysis. The voltage applied to each membrane unit was 2V. A chiller was started to keep the temperature of each membrane unit of the electrodialysis no more than 35 °C. The electrodialysis lasted for 200 minutes. Desalted water was discharged from the feed liquid chamber while a concentrate containing tetrapropylammonium hydroxide was discharged from the concentration chamber.

The constitution of desalted water was determined. The results are listed in Table 1.

### Comparative Example 1

A method identical to the method in Example 1 was adopted for treating an equivalent amount of wastewater. The difference lies in that the cation exchange membrane used herein was a homogeneous cation exchange membrane of the type FKS purchased from German FuMA-Tech Company (with an ion exchange capacity of 0.9meq/g dry membrane and membrane surface resistance of 1.77Ω·cm²). The experimental results are listed in Table 1.

### Comparative Example 2

A method identical to the method in Example 1 was adopted for treating an equivalent amount of wastewater. The difference lies in that the cation exchange membrane used herein was a homogeneous cation exchange membrane of the type CM-1 purchased from Japanese Tokuyama Company (with an ion exchange capacity of 2.3meq/g dry membrane and membrane surface resistance of 3.35Ω·cm²). The experimental results are listed in Table 1.

### Comparative Example 3

A method identical to the method in Example 1 was adopted for treating an equivalent amount of wastewater. The difference lies in that the cation exchange membrane used herein was a homogeneous cation exchange membrane of the type Nafion115 purchased from American E.I. Du Pont Company (with an ion exchange capacity of 0.89meq/g dry membrane and membrane surface resistance of 0.52Ω·cm²). The experimental results are listed in Table 1.

### Comparative Example 4

A method identical to the method in Comparative Example 3 was adopted for treating an equivalent amount of wastewater. The difference lies in that the initial voltage applied to each membrane unit was 3V The experimental results are listed in Table 1.

### Comparative Example 5

A method identical to the method in Example 1 was adopted for treating an equivalent amount of wastewater. The difference lies in that the cation exchange membrane used herein was a heterogeneous cation exchange membrane of the type 3361-BW purchased from Shanghai Chemical Plant; the anion exchange membrane used herein was a heterogeneous anion exchange membrane of the type 3362-BW purchased from Shanghai Chemical Plant. The initial voltage applied to each membrane unit was 2.3V. The experimental results are listed in Table 1.

### Example 2

A method identical to the method in Example 1 was adopted for treating an equivalent amount of wastewater. The difference lies in that the anion exchange membrane used herein was a homogeneous anion exchange membrane of the type AM-1 (with an ion exchange capacity of 2.1meq/g dry membrane and membrane surface resistance of 5.9Ω·cm²) purchased from Japanese Tokuyama Company. The experimental results are listed in Table 1.

### Example 3

A method identical to the method in Example 1 was adopted for treating an equivalent amount of wastewater. The difference lies in that the anion exchange membrane used herein was a homogeneous styrene-type cation exchange membrane (with an ion exchange capacity of 2.5meq/g dry membrane and membrane surface resistance of 2.36Ω·cm²) purchased from Beijing Tingrun Membrane Technology Development Co.. The experimental results are listed in Table 1.

**Table 1**

| Item | COD value (mg/L) | Tetrapropylammonium ions (mg/L) |
|---|---|---|
| Wastewater | 65409 | 20520.4 |
| Example 1 | 2123 | 486.5 |
| Comparative Example 1 | 62375 | 19370.6 |
| Comparative Example 2 | 58117 | 18105 |
| Comparative Example 3 | 61729 | 19282.1 |
| Comparative Example 4 | 60117 | 18928 |
| Comparative Example 5 | 56018 | 17513.1 |
| Example 2 | 1998 | 451.1 |
| Example 3 | 2035 | 459.9 |

### Example 4

The crystallization wastewater from the production of titanium silicate molecular sieve TS-1 was treated in the present example. The COD value and the constitution of the wastewater are listed in Table 2. Prior to bipolar membrane electrodialysis, the wastewater was treated with hydrochloric acid having a concentration of 3 wt% so that the pH value of the wastewater was regulated to 6.8. After that, the temperature of the wastewater was raised to 55 °C and the stirring was stopped. After standing for 12 hours at 55 °C, it was filtered with an ultrafiltration membrane having a pore size of 50nm. Then the liquid phase was collected for bipolar membrane electrodialysis.

The method as depicted in FIG.4 was used in the present example for bipolar membrane electrodialysis. The cation exchange membrane used herein was a styrene-type homogeneous cation exchange membrane purchased from Hebei Guangya Company (the same as Example 1); the anion exchange membrane used herein was a homogeneous anion exchange membrane purchased from Hebei Guangya Company (the same as Example 1). The bipolar membrane was a bipolar membrane of the type BP-1 purchased from Japanese Tokuyama Company. The bipolar membrane electrodialyser (the size of the membrane stack being 200 x 400mm) had 20 membrane units in total.

The electrode liquid used in the present example was a Na₂SO₄ aqueous solution of 3 wt%.

The wastewater was delivered into the feed liquid chamber of the bipolar membrane electrodialyser. Deionized water was delivered to the acid chamber and the alkali chamber of the bipolar membrane electrodialyser. The electrode liquid was delivered to the electrode chamber of the bipolar membrane electrodialyser. After the wastewater and the deionized water had a stable flow of 100L/h and the electrode liquid had a stable flow of 100L/h, the DC power was turned on for electrodialysis. The voltage applied to each membrane unit was 2.5V. A chiller was started to keep the temperature of each membrane unit of the electrodialysis no more than 35°C. The electrodialysis lasted for 100 minutes. Desalted water was discharged from the feed liquid chamber; an alkali liquor containing tetrapropylammonium hydroxide was discharged from the alkali chamber, and; an acid liquor was discharged from the acid chamber. The constitution of the desalted water was determined. The results are listed in Table 2.

### Comparative Example 6

A method identical to the method in Example 4 was adopted for treating an equivalent amount of wastewater. The difference lies in that the cation exchange membrane used herein was a homogeneous cation exchange membrane (with an ion exchange capacity of 2.3meq/g dry membrane and membrane surface resistance of 3.35Ω·cm²) purchased from Japanese Tokuyama Company. The experimental results are listed in Table 2.

### Comparative Example 7

A method identical to the method in Example 4 was adopted for treating an equivalent amount of wastewater. The difference lies in that the cation exchange membrane used herein was a homogeneous cation exchange membrane (with an ion exchange capacity of 0.89meq/g dry membrane and membrane surface resistance of 0.52Ω·cm²) purchased from American E.I.Du Pont Company. The experimental results are listed in Table 2.

### Comparative Example 8

A method identical to the method in Example 4 was adopted for treating an equivalent amount of wastewater. The difference lies in that the cation exchange membrane used herein was a homogeneous cation exchange membrane (with an ion exchange capacity of 0.9meq/g dry membrane and membrane surface resistance of 1.77Ω·cm²) purchased from German FuMA-Tech Company. The experimental results are listed in Table 2.

### Comparative Example 9

A method identical to the method in Comparative Example 8 was adopted for treating an equivalent amount of wastewater. The difference lies in that the voltage applied to each membrane unit was 3.5V. The experimental results are listed in Table 2.

### Comparative Example 10

A method identical to the method in Example 4 was adopted for treating an equivalent amount of wastewater. The difference lies in that the cation exchange membrane used herein was a heterogeneous cation exchange membrane of the type 3361-BW purchased from Shanghai Chemical Plant; the anion exchange membrane was a heterogeneous anion exchange membrane of the type 3362-BW purchased from Shanghai Chemical Plant. The voltage applied to each membrane unit was 3V. The experimental results are listed in Table 2.

**Table 2**

| Item | COD value (mg/L) | Tetrapropylammonium ions (mg/L) |
|---|---|---|
| Wastewater | 85219 | 26358.1 |
| Example 4 | 1690 | 371.5 |
| Comparative Example 6 | 79213 | 24589.1 |
| Comparative Example 7 | 81395 | 25208.3 |
| Comparative Example 8 | 84051 | 26092.8 |
| Comparative Example 9 | 82981 | 25562.1 |
| Comparative Example 10 | 76924 | 23969.9 |

The results of Table 1 and Table 2 show that when a homogeneous cation exchange membrane is used for electrodialysis and bipolar membrane electrodialysis, the use of a styrene-type homogeneous cation exchange membrane can achive a better effect. More tetrapropylammonium ions are enriched in the alkali liquor due to a lower content of tetrapropylammonium ions in the produced desalinated liquid. Though the kind of the heterogeneous cation exchange membrane is not limited as the homogeneous cation exchange membrane in the performance of common electrodialysis and bipolar membrane electrodialysis, the electrodialysis effect and the bipolar membrane electrodialysis effect of the heterogeneous cation exchange membrane is worse than those of the styrene-type homogeneous cation exchange membrane.

### Example 5

The washing wastewater from the production of titanium silicate molecular sieve TS-1 was treated in the present example. The COD value and the constitution of the wastewater are listed in Table 3. Prior to bipolar membrane electrodialysis, the wastewater was treated with hydrochloric acid having a concentration of 2.9 wt% so that the pH value of the wastewater was regulated to 6.3. After that, the temperature of the wastewater was raised to 50 °C and the stirring was stopped. After standing for 10 hours at 50 °C, it was filtered with an ultrafiltration membrane having a pore size of 50nm. Then the liquid phase was collected for bipolar membrane electrodialysis.

The method as depicted in FIG.3 was used in the example for electrodialysis. The cation exchange membrane used herein was a styrene-type homogeneous cation exchange membrane (with an ion exchange capacity of 2.5meq/g dry membrane and membrane surface resistance of 8Ω·cm²) purchased from Beijing Tingrun Membrane Technology Development Co.. The bipolar membrane was a bipolar membrane of the type BP-1 purchased from Japanese Tokuyama Company. The bipolar membrane electrodialyser (the size of the membrane stack being 200 x 400mm) had 20 membrane units in total.

The electrode liquid used in the present example was a Na₂SO₄ aqueous solution of 4 wt%.

The wastewater was delivered into the feed liquid chamber of the bipolar membrane electrodialyser. Deionized water was delivered to the alkali chamber of the bipolar membrane electrodialyser. The electrode liquid was delivered to the electrode chamber of the bipolar membrane electrodialyser. After the wastewater and the deionized water had a stable flow of 120L/h and the electrode liquid had a stable flow of 120L/h, the DC power was turned on for bipolar membrane electrodialysis. The voltage applied to each membrane unit was 2V. A chiller was started to keep the temperature of each membrane unit of the bipolar membrane electrodialysis no more than 30°C. The electrodialysis lasted for 50 minutes. Desalted water was discharged from the feed liquid chamber; an alkali liquor containing tetrapropylammonium hydroxide was discharged from the alkali chamber; an acid liquor was discharged from the acid chamber. The consititution of desalted water was determined. The results are listed in Table 3.

### Example 6

A method identical to the method in Example 5 was adopted for treating an equivalent amount of wastewater. The difference lies in that the initial voltage applied to each membrane unit was 1.8V. Under the condition of the same processing load of wastewater, the bipolar membrane lasted for 1 hour. The experimental results are listed in Table 3.

### Example 7

A method identical to the method in Example 5 was adopted for treating an equivalent amount of wastewater. The difference lies in that the voltage applied to each membrane unit was 2.5V. The experimental results are listed in Table 3.

### Example 8

A method identical to the method in Example 5 was adopted for treating an equivalent amount of wastewater. The difference lies in that the anion exchange membrane used herein was a homogeneous anion exchange membrane of the type AM-1 purchased from Japanese Tokuyama Company. The experimental results are listed in Table 3.

**Table 3**

| Item | COD value (mg/L) | Tetrapropylammonium ions (mg/L) |
|---|---|---|
| Wastewater | 65409 | 20520.4 |
| Example 5 | 1253 | 265.4 |
| Example 6 | 2195 | 530.7 |
| Example 7 | 1003 | 212.3 |
| Example 8 | 1637 | 362.6 |

### Example 9

The washing wastewater from the production of titanium silicate molecular sieve TS-1 was treated in the present example. The COD value and the constitution of the wastewater are listed in Table 4. Prior to electrodialysis, the wastewater was treated with an aqueous solution of titanium tetrachloride having a concentration of 20 wt% so that the pH value of the wastewater was regulated to 6.5-7.5. After that, the temperature of the wastewater was raised to 75 °C and the stirring was stopped. After standing for 12 hours at 75 °C, it was filtered with an ultrafiltration membrane having a pore size of 50nm. Then the liquid phase was collected for electrodialysis.

The other conditions of the present example were the same as Example 1. The wastewater was delivered into the feed liquid chamber of the electrodialyser. Wastewater, deionized water and the electrode liquid were respectively delivered to the feed liquid chamber, the concentration chamber and the electrode chamber of the electrodialyser. After the wastewater and the deionized water had a stable flow of 70L/h and the electrode liquid had a stable flow of 70L/h, the DC power was turned on for electrodialysis. The voltage applied to each membrane unit was 1.8V. A chiller was started to keep the temperature of each membrane unit of the electrodialysis no more than 35 °C. The electrodialysis lasted for 150 minutes. Desalted water was discharged from the feed liquid chamber while a concentrate containing tetrapropylammonium hydroxide was discharged from the concentration chamber.

The consititution of desalted water was determined. The results are listed in Table 4.

**Table 4**

| Item | SiO₂ content (mg/L) | COD value (mg/L) | Tetrapropylammonium ions (mg/L) |
|---|---|---|---|
| Wastewater | 2800 | 65409 | 20520.4 |
| Example 9 | 4.1 | 1625 | 370 |

### Example 10

A mixture of the crystallization mother liquor and the washing wastewater from the production of titanium silicate molecular sieve TS-1 was treated in the present example. The COD value and the constitution of the wastewater are listed in Table 5.

The method as depicted in FIG.5 was used in the present example for electrodialysis. The cation exchange membrane used herein was a styrene-type homogeneous cation exchange membrane purchased from Hebei Guangya Company (the same as Example 1); the anion exchange membrane used herein was a homogeneous styrene-type anion exchange membrane purchased from Hebei Guangya Company (the same as Example 1); the bipolar membrane was a bipolar membrane of the type BP-1 purchased from Japanese Tokuyama Company. The common electrodialyser (the size of the membrane stack being 200 x 400mm) had 12 membrane units in total and the bipolar membrane electrodialyser (the size of the membrane stack being 200 x 400mm) had 12 membrane units in total.

The electrode liquids used in the common electrodialysis and the bipolar membrane electrodialysis in the present example were both a Na₂SO₄ aqueous solution of 3 wt%.

The following process was used in the example for treating the wastewater.
(1) The wastewater produced from the preparation of a molecular sieve was delivered into a pretreatment tank of 100L. HCl having a concentration of 3 wt%, which was the acid liquor produced from the previous bipolar membrane electrodialysis, was added under stirring at an ambient temperature (25°C) so that the pH of the wastewater was regulated to 6. After that the temperature of the wastewater was raised to 80 °C and the stirring was stopped. After standing for 24 hours at 80 °C, it was filtered with an ultrafiltration membrane having a pore size of 50nm and thus produced a solid phase and a liquid phase (the yield of the liquid phase based on the total amount of the wastewater was 90wt%).
(2) The filtrate obtained in step (1) was delivered into the feed liquid chamber of the common electrodialyser. Water, which was desalted water obtained from the previous electrodialysis, was respectively delivered into the concentration chamber of the common electrodialyser; water, which was desalted water obtained from the previous electrodialysis, was respectively delivered into the acid chamber and the alkali chamber of the bipolar membrane electrodialyser; the concentrate obtained from the common electrodialysis was delivered into the feed liquid chamber of the bipolar membrane electrodialyser; the electrode liquid was respectively delivered into the electrode chamber of the common electrodialyser and of the bipolar membrane electrodialyser. After the wastewater and the deionized water had a stable flow of 80L/h and the electrode liquid had a stable flow of 80L/h, the DC power of the common electrodialyser and the bipolar membrane electrodialyser was turned on for electrodialysis.

Therein, the voltage applied to each membrane unit was 2V in the common electrodialyser. A chiller was started to keep the temperature of each membrane unit no more than 35 °C.

The voltage applied to each membrane unit was 2.5V in the bipolar membrane electrodialyser. A chiller was started to keep the temperature of each membrane unit no more than 35 °C.

The electrodialysis lasted for 4 hours in total to produce the desalted water discharged from the feed liquid chamber of the common electrodialysis and the feed liquid chamber of the bipolar membrane electrodialyser, an alkali liquor containing tetrapropylammonium hydroxide discharged from the alkali chamber of the bipolar membrane electrodialyser, and an acid liquor discharged from the acid chamber of the bipolar membrane electrodialyser.

The constitution of the desalted water, which was a mixture of the desalted water obtained from the bipolar membrane electrodialysis and the common electrodialysis, discharged from the feed liquid chamber of the bipolar membrane electrodialyser and the feed liquid chamber of the common electrodialysis was determined. The results are listed in Table 5.

(3) The alkali liquor obtained from the bipolar membrane electrodialysis was concentrated to a concentration of 10-15wt% and used for the preparation of titanium silicate molecular sieve TS-1 prepared in the method disclosed in Example 1 of CN1167082A together with the desalted water discharged from the common electrodialyser and the bipolar membrane electrodialyser

The structural parameters of the prepared titanium silicate molecular sieve TS-1 are listed in Table 6, wherein a fresh tetrapropylammonium hydroxide and a fresh deionized water were employed for preparing titanium silicate molecular sieve TS-1 in the same process as the control group. The structural parameters are listed in Table 6.

**Table 5**

| Item | COD value (mg/L) | Tetrapropylammonium ions (mg/L) |
|---|---|---|
| Wastewater | 63258 | 19635.9 |
| Example 10 | 1650 | 362.6 |

**Table 6**

| Item | Relative crystallinity* | Specific surface area** | Total pore volume** |
|---|---|---|---|
| | (%) | (m²/g) | (mL/g) |
| control group | 72.2 | 432 | 0.277 |
| Example 10 | 73 | 430 | 0.276 |

| | | | |
|---|---|---|---|
| ^{∗}: Determined according to the method specified in RIPP 139-90 ^{∗∗}: BETmethod | | | |

The results of Examples 1-10 demonstrate that the use of the method of the present invention for treating wastewater containing an organic ammonium ion can effectively reduce the content of organic ammonium ion in the wastewater. The results of Examples 1-10 further demonstrate that the use of the method of the present invention for treating the wastewater produced in the preparation of a molecular sieve can achieve a rational and effective reuse of various sources in the wastewater, basically without discharging of any wastewater and/or wastes.

### Example 11

The washing wastewater from the production of titanium silicate molecular sieve TS-1 was treated in the present example. The COD value and the constitution of the wastewater are listed in Table 7.

In this Example, the cation exchange membrane used herein was a styrene-type homogeneous cation exchange membrane purchased from Hebei Guangya Company (the same as Example 1); the anion exchange membrane used herein was a homogeneous anion exchange membrane purchased from Hebei Guangya Company (the same as Example 1); the bipolar membrane was a bipolar membrane of the type BP-1 purchased from Japanese Tokuyama Company. The bipolar membrane electrodialyser (the size of the membrane stack being 200 x 400mm) had 20 membrane units in total. The electrodialyser (the size of the membrane stack being 200 x 400mm) had 12 membrane units in total. The electrode liquid used was a Na₂SO₄ aqueous solution of 3 wt%.

The following flow process was adopted in the present example to treat the wastewater from the production of a molecular sieve, wherein the liquid phase obtained in step (1) was treated in step (2) using the embodiment represented in FIG. 11.
(1) The wastewater from the preparation of a molecular sieve was delivered into a pretreatment tank of 20L. Hydrochloric acid having a concentration of 2.9wt%, which was the acid liquor produced from the previous bipolar membrane electrodialysis, was added under stirring at an ambient temperature (25°C) so that the pH of the wastewater was regulated to 6.8. After that, the temperature of the wastewater was raised to 55 °C and the stirring was stopped. After standing for 12 hours at 55 °C, it was filtered with an ultrafiltration membrane having a pore size of 50nm and thus produced a solid phase and a liquid phase (the yield of the liquid phase based on the total amount of the wastewater was 90wt%).
(2) The liquid phase obtained in step (1) was delivered into the desalination tank. Water, which was desalted water obtained from the previous electrodialysis, was delivered into the intermediate salt tank; water, which was desalted water obtained from the previous electrodialysis, was respectively delivered into the acid liquor tank and alkali liquor tank; the electrode liquid was delivered into the electrode liquid tank (not exhibited in FIG. 11)

The feed water circulating pumps of each chamber of the electrodialyser and the bipolar membrane electrodialyser were turned on. The flow of the feed liquid chamber and the concentration chamber of the electrodialyser was regulated to 70L/h. The flows of the feed liquid chamber, the acid chamber and the alkali chamber of the bipolar membrane electrodialyser were regulated to 60L/h; the flow of the electrode liquid chamber of the electrodialyser and the bipolar membrane electrodialyser was regulated to 70L/h.

The DC power of the electrodialyser and the bipolar membrane electrodialyser was turned on, wherein the voltage of the bipolar membrane electrodialyser was regulated and fixed at 50V, and the voltage of the electrodialyser was regulated to 20V.

The electrodialysis and the bipolar membrane electrodialysis lasted for 60 minutes in total. The constitution and the COD value of the desalted water discharged from the electrodialyser are listed in Table 7. The concentrations of the acid liquor and the alkali liquor produced from the bipolar membrane electrodialysis were respectively 2.9wt% and 3.1wt%. The acid liquor could be directly delivered into the pretreatment step as a precipitant. The alkali liquor could be concentrated into an alkali liquor of a concentration of 12wt% which is then delivered into the synthesis unit as an alkali source.

### Example 12

A method identical to the method in Example 11 was adopted for treating an equivalent amount of wastewater. The difference lies in that the voltage of the electrodialyser was regulated to 30V in step (2).

The constitution and the COD value of the desalted water discharged from the electrodialyser are listed in Table 7. The concentrations of the acid liquor and the alkali liquor produced from the bipolar membrane electrodialysis are respectively 3. 1wt% and 3. 1wt%.

**Table 7**

| Item | COD value (mg/L) | Tetrapropylammonium ions (mg/L) |
|---|---|---|
| Wastewater | 65409 | 20520.4 |
| Example 11 | 2238 | 548.4 |
| Example 12 | 1953 | 442.3 |

### Example 13

A mixture of a washing wastewater and a crystallization mother liquor from the production of the titanium silicate molecular sieve TS-1 was treated in the present example. The COD value and the constitution of the wastewater are listed in Table 8.

The cation exchange membrane used in the example was a styrene-type homogeneous cation exchange membrane (with an ion exchange capacity of 2.5meq/g dry membrane and membrane surface resistance of 8Ω·cm²) purchased from Beijing Tingrun Membrane Technology Development Co.. The anion exchange membrane used was a homogeneous anion exchange membrane (with an ion exchange capacity of 2.5meq/g dry membrane and membrane surface resistance of 2.36Ω·cm²) purchased from Beijing Tingrun Membrane Technology Development Co.. The bipolar membrane was a bipolar membrane of the type BP-1 purchased from Japanese Tokuyama Company. The bipolar membrane electrodialyser (the size of the membrane stack being 200 x 400mm) had 10 membrane units in total. The electrodialyser (the size of the membrane stack being 200 x 400mm) had 12 membrane units in total. The electrode liquid was a Na₂SO₄ aqueous solution of 5 wt%.

The following flow process was adopted in the present example to treat the wastewater from the production of a molecular sieve, wherein the liquid phase obtained in step (1) was treated in steps (2) to step (3) using the embodiment represented in FIG. 12.
(1) The wastewater from the preparatioin of a molecular sieve was delivered into a pretreatment tank of 20L. Hydrochloric acid having a concentration of 2.2wt%, which was the acid liquor produced from the previous bipolar membrane electrodialysis, was added under stirring at an ambient temperature (25°C) so that the pH of the wastewater was regulated to 6.5. After that, the temperature of the wastewater was raised to 75 °C and the stirring was stopped. After standing for 24 hours at 75 °C, it was filtered with an ultrafiltration membrane having a pore size of 50nm and thus produced a solid phase and a liquid phase (the yield of the liquid phase based on the total amount of the wastewater was 91wt%).
(2) The liquid phase obtained in step (1) was delivered into the desalination tank. Water, which was the desalted water obtained from the previous bipolar membrane electrodialysis, was delivered into the intermediate salt tank; water, which was the desalted water obtained from the previous electrodialysis, was respectively delivered into the acid liquor tank and the alkali liquor tank; the electrode liquid was delivered into the electrode liquid tank (not exhibited in FIG.12)

The feed water circulating pumps for each chamber of the electrodialyser and the bipolar membrane electrodialyser were turned on. The flows of the feed liquid chamber and the concentration chamber of the electrodialyser were regulated to 70L/h. The flows of the feed liquid chamber, the acid chamber and the alkali chamber of the bipolar membrane electrodialyser were regulated to 70L/h; the flows of the electrode liquid chamber of the electrodialyser and the bipolar membrane electrodialyser were regulated to 70L/h.

The DC power of the electrodialyser and the bipolar membrane electrodialyser was turned on, wherein voltage of the bipolar membrane electrodialyser was regulated and fixed at 20V and the voltage of the electrodialyser was regulated to 25V. The electrodialysis and the bipolar membrane electrodialysis lasted for 50 minutes in total.

Therein, the constitution and COD value of the desalted water discharged from the electrodialyser are listed in Table 8. The concentrations of the acid liquor and the alkali liquor produced from the bipolar membrane electrodialysis are respectively 2.2wt% and 2.1wt%. The acid liquor could be directly delivered into the pretreatment step as a precipitant. The alkali liquor could be concentrated into an alkali liquor with a concentration of 10wt% which is then delivered into the synthesis unit as an alkali source.

(3) After being concentrated to a concentration of 10wt%, the alkali liquor obtained from the bipolar membrane electrodialysis was used for the preparation of titanium silicate molecular sieve TS-1 prepared in the method disclosed in Example 1 of CN1167082A, together with the desalted water discharged from the electrodialysis.

The structural parameters of the prepared titanium silicate molecular sieve TS-1 are listed in Table 9, wherein a fresh tetrapropylammonium hydroxide and a fresh deionized water were employed for preparing titanium silicate molecular sieve TS-1 in the same process as the control group. The structural parameters are listed in Table 9.

**Table 8**

| Item | COD value (mg/L) | Tetrapropylammonium ions (mg/L) |
|---|---|---|
| Wastewater | 65409 | 20520.4 |
| Example 13 | 2387 | 601.5 |

**Table 9**

| Item | Relative crystallinity* | Specific surface area** | Pore volume** |
|---|---|---|---|
| | (%) | (m²/g) | (mL/g) |
| Control group* | 72.2 | 432 | 0.277 |
| Example 13 | 73.5 | 431 | 0.274 |

| | | | |
|---|---|---|---|
| *: the relative crystallinity of the molecular sieve was determined according to the method disclosed on pages 414-415 of Analysis Method of Petrochemical Engineering (RIPP Test Method) (Yang Cuiding, Science Press, 1990); **: BET method | | | |

The results of Examples 11-13 demonstrate that the use of the method of the present invention for treating wastewater containing tetrapropylammonium ions can effectively reduce the content of tetrapropylammonium ions in the water. Moreover, tetrapropylammonium hydroxide can be recovered.

## Claims

1. A method for the treatment of wastewater containing at least one organic ammonium ion and optionally impurities such as soluble silica,
which method comprises an electrodialysis of the optionally pretreated wastewater to obtain desalted water having a reduced content of organic ammonium ion and a concentrate containing an organic ammonium ion,
wherein the electrodialysis is carried out in at least one electrodialyser, the membrane stack of the electrodialyser has at least one membrane unit, and the membranes in at least a part of the membrane unit(s) comprise a styrene-type homogeneous cation exchange membrane,
wherein the organic ammonium ion is represented by formula I, 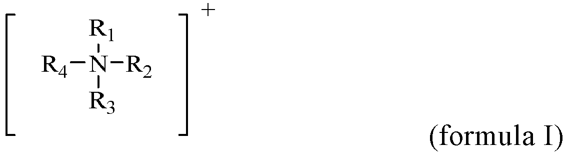
in formula I, R₁, R₂, R₃ and R₄ are independently selected from C₁-C₅ alkyl, and C₆₋C₁₂ aryl.

2. A method according to Claim 1, one or more of the following features are fulfilled:
the method comprises a pretreatment step, in which the wastewater is subjected to a solid-liquid separation to obtain a solid phase and a liquid phase, and the said liquid phase is delivered to a wastewater treatment step for electrodialysis,
the wastewater is contacted with at least one precipitant prior to the solid-liquid separation of the wastewater so that the silicon in the wastewater forms a colloid, wherein the precipitant is preferably selected from the group consisting of acid, divalent, trivalent and tetravalent metal salts, more preferably tetravalent metal salts, such as titanium tetrachloride and titanyl sulfate,
the membrane surface resistance of the styrene-type homogeneous cation exchange membrane is 1-15 Ω·cm2, preferably 3-12 Ω·cm2 and more preferably 4-9Ω·cm2,
the ion exchange capacity of the styrene-type homogeneous cation exchange membrane is 1-5meq/g dry membrane, preferably 1.5-3meq/g dry membrane and more preferably 1.8-2.6meq/g dry membrane,
the electrodialysis is a common electrodialysis performed in the following manner: the membranes in the membrane unit are an anion exchange membrane and a cation exchange membrane; the anion exchange membrane and the cation exchange membrane divide the internal space of the membrane unit into a feed liquid chamber and a concentration chamber; the wastewater enters the feed liquid chamber and water enters the concentration chamber; the said desalted water is obtained from the feed liquid chamber and a concentrate as the alkali liquor is obtained from the said concentration chamber during the electrodialysis, or
the electrodialysis is a bipolar membrane electrodialysis which is preferably carried out in one, two or three of the following methods:
Method I: the membrane stack of the bipolar membrane electrodialyser has at least one membrane unit; the membranes in the membrane unit are a bipolar membrane and a cation exchange membrane; the said bipolar membrane and the cation exchange membrane divide the internal space of the membrane unit into an alkali chamber and a feed liquid chamber; the said wastewater or the said liquid phase enters the feed liquid chamber and water enters the said alkali chamber; an acid liquor is obtained from the feed liquid chamber and an alkali liquor containing an organic ammonium ion is obtained from the alkali chamber during the electrodialysis;
Method II: the membrane stack of the bipolar membrane electrodialyser has at least one membrane unit; the membranes in the membrane unit are a bipolar membrane and an anion exchange membrane; the said bipolar membrane and the anion exchange membrane divide the internal space of the membrane unit into an acid chamber and a feed liquid chamber; the said wastewater or the said liquid phase enters the feed liquid chamber and water enters the said acid chamber; an alkali liquor containing an organic ammonium ion is obtained from the feed liquid chamber and an acid is obtained from the acid chamber during the electrodialysis;
Method III: the membrane stack of the bipolar membrane electrodialyser has at least one membrane unit; the membranes in the membrane unit are a bipolar membrane, an anion exchange membrane and a cation exchange membrane; the said bipolar membrane, the anion exchange membrane and the cation exchange membrane divide the internal space of the membrane unit into an acid chamber, a feed liquid chamber and an alkali chamber; the feed liquid chamber is located between the acid chamber and the alkali chamber; the said wastewater or the said liquid phase enters the feed liquid chamber and water enters the said acid chamber and the alkali chamber respectively; desalted water is obtained from the feed liquid chamber, an acid liquor is obtained from the acid chamber and an alkali liquor containing an organic ammonium ion is obtained from the alkali chamber during the electrodialysis,
the concentrate is subjected to a bipolar membrane electrodialysis to produce an acid liquor, an alkali liquor containing an organic ammonium ion and a second desalted water.

3. A method according to Claim 1 or Claim 2, wherein one or more of the following features are fulfilled:
the electrodialysis comprises a common electrodialysis and a bipolar membrane electrodialysis; the membranes in the membrane unit of the common electrodialysis are an anion exchange membrane and a cation exchange membrane; the said anion exchange membrane and the cation exchange membrane divide the internal space of the membrane unit into a feed liquid chamber and a concentration chamber;
the membranes in the membrane unit of the bipolar membrane electrodialysis are a bipolar membrane, an anion exchange membrane and a cation exchange membrane; the said bipolar membrane, the said anion exchange membrane and the said cation exchange membrane divide the internal space of the membrane unit into an acid chamber, a feed liquid chamber and an alkali chamber; the feed liquid chamber is located between the acid chamber and the alkali chamber;
the said wastewater is subjected to an electrodialysis in the common electrodialysis to produce a first desalted water and a concentrate having an increased content of organic ammonium ion; the said concentrate is subjected to a bipolar membrane electrodialysis in the bipolar membrane electrodialysis to produce an acid liquor, an alkali liquor and a second desalted water,
the voltage applied to each membrane unit of the common electrodialysis during the electrodialysis is 0.1-5V, preferably 0.5-4V and more preferably 1-3V; and/or the voltage applied to each membrane unit of the bipolar membrane electrodialysis is 0.1-8V, preferably 1-6V and more preferably 2-5 V,
the conditions of the electrodialysis make the content of organic ammonium ion in the desalted water 2000mg/L or less, preferably 1000mg/L or less, and more preferably 500mg/L or less,
the concentration of the organic ammonium ion in the wastewater is 1000-35000mg/L, preferably 2000-30000mg/L and more preferably 10000-30000mg/L,
the said organic ammonium ion is tetrapropylammonium ion.

4. A method according to any one of Claim 1 to Claim 3, wherein the wastewater is the wastewater from the preparation of a molecular sieve using organic ammonium hydroxide, preferably a crystallization mother liquor from a crystallization step in the preparation of a molecular sieve using organic ammonium hydroxide, washing wastewater from the washing step in the preparation of a molecular sieve using organic ammonium hydroxide, or a mixture of the said crystallization mother liquor and the said washing wastewater, and the molecular sieve preferably is at least one selected from the group consisting of a titanium silicate molecular sieve, BETA molecular sieve, SSZ-13 molecular sieve and Silicate-1,
preferably the organic ammonium hydroxide is selected from the compound represented by formula II, 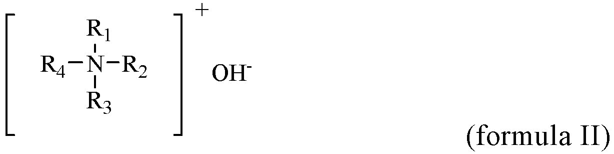
in formula II, R₁, R₂, R₃ and R₄ are independently selected from C₁-C₅ alkyl, and C₆₋C₁₂ aryl;
preferably, the said organic ammonium hydroxide is tetrapropylammonium hydroxide.

5. A wastewater treatment system (I) or (II),
wherein the system (I) comprises the following features:
the wastewater is the wastewater containing an organic ammonium ion from the preparation of a molecular sieve, the treatment system comprising a wastewater storage unit, an optional pretreatment unit, a common electrodialysis unit and a bipolar membrane electrodialysis unit as connected in series;
wherein
the wastewater storage unit is used for receiving and storing wastewater;
the optional pretreatment unit is used for contacting the wastewater from the wastewater storage unit with at least one precipitant so that after silicon in the wastewater forms a colloid, a solid-liquid separation is carried out to obtain a liquid phase and a solid phase;
the common electrodialysis unit is used for carrying out a common electrodialysis on the wastewater or the said liquid phase to obtain a first desalted water having a reduced content of organic ammonium ion and a concentrate containing an organic ammonium ion;
the bipolar membrane electrodialysis unit is used for carrying out a bipolar membrane electrodialysis on the concentrate discharged from the common electrodialysis unit to obtain an acid liquor, an alkali liquor containing an organic ammonium ion and an optional second desalted water,
wherein the organic ammonium ion is as defined in claim 1, and the membranes in at least a part of the membrane unit(s) comprise a styrene-type homogeneous cation exchange membrane;
wherein the system (II) comprises the following features:
the wastewater is the wastewater containing an organic ammonium ion from the preparation of a molecular sieve, the treatment system comprising a desalination tank, an intermediate salt tank, a common electrodialyser, a bipolar membrane electrodialyser, an alkali liquor tank, an acid liquor tank and an optional desalted water tank;
wherein
the membranes in the membrane unit of the common electrodialyser are a cation exchange membrane and an anion exchange membrane which divide the internal space of the membrane unit into a feed liquid chamber and a concentration chamber; the membranes in the membrane unit of the bipolar membrane electrodialyser are a bipolar membrane, a cation exchange membrane and an anion exchange membrane which divide the internal space of the membrane unit into a feed liquid chamber, an acid chamber and an alkali chamber, wherein the liquid chamber is located between the said acid chamber and the said alkali chamber;
the desalination tank which is used for receiving wastewater is communicated with the feed liquid chamber of the common electrodialyser in the common electrodialysis unit and provides feed water to the feed liquid chamber and optionally receives an effluent from the feed liquid chamber;
the intermediate salt tank which is communicated with the concentration chamber of the electrodialyser provides feed water to the concentration chamber and receives an effluent from the concentration chamber, and the feed liquid chamber of the bipolar membrane electrodialyser is communicated with the intermediate salt tank to receive a concentrate discharged from the intermediate salt tank as feed water;
the said alkali liquor tank is communicated with the alkali chamber of the bipolar membrane electrodialyser for receiving an alkali liquor discharged from the alkali chamber of the bipolar membrane electrodialyser and provides feed water to the alkali chamber of the bipolar membrane electrodialyser;
the said acid liquor tank is communicated with the acid chamber of the bipolar membrane electrodialyser for receiving an acid liquor discharged from the acid chamber of the bipolar membrane electrodialyser, and provides feed water to the acid chamber of the bipolar membrane electrodialyser;
the desalted water tank is communicated with the alkali liquor tank and the acid liquor tank and with the desalination tank or with the feed liquid chamber of the electrodialyser for receiving the first desalted water discharged from the desalination tank or for receiving the first desalted water discharged from the feed liquid chamber of the electrodialyser, while providing feed water to the said alkali liquor tank and the said acid liquor tank,
wherein the organic ammonium ion is as defined in claim 1, and
the cation exchange membrane is a styrene-type homogeneous cation exchange membrane.

6. The system according to Claim 5, wherein one or more of the following features are fulfilled for the system (I):
the common electrodialysis unit comprises at least one common electrodialyser wherein the membrane stack of the said common electrodialyser has at least one membrane unit, the membranes in at least a part of the membrane unit are a cation exchange membrane and an anion exchange membrane, and the said cation exchange membrane and the said anion exchange membrane divide the internal space of the membrane unit into a feed liquid chamber and a concentration chamber,
the bipolar membrane electrodialysis unit comprises at least one bipolar membrane electrodialyser, the membrane unit of which adopts one, two or three of the following methods:
Method 1: the membranes in the membrane unit are a bipolar membrane and a cation exchange membrane, and the said bipolar membrane and the said cation exchange membrane divide the internal space of the membrane unit into an alkali chamber and a feed liquid chamber;
Method 2: the membranes in the membrane unit are a bipolar membrane and an anion exchange membrane, and the said bipolar membrane and the said anion exchange membrane divide the internal space of the membrane unit into an acid chamber and a feed liquid chamber;
Method 3: the membranes in the membrane unit are a bipolar membrane, an anion exchange membrane and a cation exchange membrane, and the said bipolar membrane, the said anion exchange membrane and the said cation exchange membrane divide the internal space of the membrane unit into an acid chamber, a feed liquid chamber and an alkali chamber, wherein the feed liquid chamber is located between the said acid chamber and the said alkali chamber,
the system further comprises a first cycle unit and/or a second cycle unit;
wherein
the said first cycle unit is used for delivering an acid liquor discharged from the bipolar membrane electrodialysis unit into the pretreatment unit at least in part as a precipitant;
the said second cycle unit is used for delivering the first desalted water and/or the second desalted water into the common electrodialysis unit and/or the bipolar membrane electrodialysis unit as water for the common electrodialysis and/or the bipolar membrane electrodialysis.

7. The system according to Claim 5, wherein the system (II) further comprises a pretreatment unit which is located upstream of the desalination tank for contacting the wastewater with at least one precipitant so that a solid-liquid separation can be carried out after silicon in the wastewater forms a colloid, and the liquid phase produced from the solid-liquid separation is delivered to the desalination tank.

8. The system according to Claim 5 or Claim 6, wherein the system (II) further comprises an organic ammonium hydroxide recovery tank and an acid recovery tank;
wherein
the said organic ammonium hydroxide recovery tank is used for receiving the alkali liquor discharged from the alkali liquor tank;
the said acid recovery tank is for receiving the acid liquor discharged from the acid liquor tank;
preferably wherein the said acid recovery tank is communicated with the pretreatment unit for delivering at least a part of the acid liquor into the pretreatment unit as a precipitant;
the said organic ammonium hydroxide recovery tank is communicated with the synthesis unit for delivering the alkali liquor containing organic ammonium hydroxide into the synthesis unit;
the said desalted water tank is communicated with one, two or three of the following units: the said synthesis unit for providing water for synthesis to the synthesis unit; the said crystallization unit for providing water for termination of the crystallization to the crystallization unit; the said separation and washing unit for providing washing water to the separation and washing unit, wherein the said synthesis unit, crystallization unit and separation and washing unit refer to the units comprised in the preparation of the molecular sieve.

9. The system according to Claim 5, wherein the membrane surface resistance of the styrene-type homogeneous cation exchange membrane is 1-15 Ω·cm², preferably 3-12 Ω·cm² and more preferably 4-9Ω·cm²; and/or the ion exchange capacity of the styrene-type homogeneous cation exchange membrane is 1-5meq/g dry membrane, preferably 1.5-3meq/g dry membrane, and more preferably 1.8-2.6meq/g dry membrane.

10. A method for the preparation of a molecular sieve, comprising a synthetic step, a crystallization step, a separation and washing step and a wastewater treatment step;
wherein
in the synthetic step, a raw material is contacted with water for reaction, wherein the raw material contains a silicon source, an organic ammonium hydroxide and an optional titanium source;
in the crystallization step, the reaction mixture obtained from the synthesis step is crystallized;
in the separation and washing step, the mixture obtained from the crystallization step is brought to a solid-liquid separation to produce a solid phase and a crystallization mother liquor, and the said solid phase is washed to obtain a molecular sieve and washing wastewater;
in the wastewater treatment process, an alkali liquor containing an organic ammonium ion and desalted water having a reduced content of organic ammonium ion are produced from an electrodialysis of the wastewater, and the said wastewater is the said crystallization mother liquor, the said washing wastewater or a mixture of the crystallization mother liquor and the washing wastewater wherein the wastewater is treated using the method according to any one of Claim 1 to Claim 4,
wherein the organic ammonium ion is as defined in claim 1.

11. The method according to Claim 10, wherein the method further comprises one, two or three of the first cyclic step, the second cyclic step and the third cyclic step;
wherein
in the first cyclic step, the desalted water is recycled in one of the following steps: as water for synthesis in the synthesis step; for termination of the crystallization in the crystallization step; as the washing water in the separation and washing step;
in the second cyclic step, the alkali liquor obtained from electrodialysis is recycled in the synthesis step;
in the third cyclic step, the acid liquor obtained in the presence of a bipolar membrane electrodialysis is recycled in the pretreatment step at least in part as a precipitant.

12. A molecular sieve preparation system which comprises a synthesis unit, a crystallization unit, a separation and washing unit and a wastewater treatment unit;
wherein
the synthetic unit is used for contacting an raw material with water for reaction, and the said raw material contains a silicon source, an organic ammonium hydroxide and an optional titanium source;
the crystallizing unit is used for crystallizing the reaction mixture obtained from the synthesis step;
the separation and washing unit is used for a solid-liquid separation of the mixture obtained from the crystallization step to produce a solid phase and a crystallization mother liquor, and the solid phase is washed to obtain a molecular sieve and washing wastewater;
the wastewater treatment unit is used for an electrodialysis of the wastewater to produce an alkali liquor containing an organic ammonium ion and desalted water having a reduced content of organic ammonium ion, wherein the said wastewater is the crystallization mother liquor, the washing wastewater or a mixture of the crystallization mother liquor and the washing wastewater, wherein the said electrodialysis is carried out in at least one electrodialyser, the membrane stack of the electrodialyser has at least one membrane unit, and the membranes in at least a part of the membrane unit comprise a styrene-type homogeneous cation exchange membrane,
wherein the organic ammonium ion is as defined in claim 1.

13. The system according to claim 12, wherein the electrodialyser is at least one common electrodialyser; the membranes in the membrane unit of the said common electrodialyser are combined in the following manner: the membranes in the membrane unit are an anion exchange membrane and a cation exchange membrane; the anion exchange membrane and the cation exchange membrane divide the internal space of the membrane unit into a feed liquid chamber and a concentration chamber; the feed liquid chamber receives the wastewater,
or wherein the electrodialyser is at least one bipolar membrane electrodialyser; the membrane unit of the said bipolar membraneelectrodialyser adopts one, two or three of the following methods:
Method 1: the membranes in the membrane unit are a bipolar membrane and a cation exchange membrane, and the bipolar membrane and the cation exchange membrane divide the internal space of the membrane unit into an alkali chamber and a feed liquid chamber;
Method 2: the membranes in the membrane unit are a bipolar membrane and an anion exchange membrane, and the bipolar membrane and the anion exchange membrane divide the internal space of the membrane unit into an acid chamber and a feed liquid chamber;
Method 3: the membranes in the membrane unit are a bipolar membrane, an anion exchange membrane and a cation exchange membrane, and the said bipolar membrane, the said anion exchange membrane and the said cation exchange membrane divide the internal space of the membrane unit into an acid chamber, a feed liquid chamber and an alkali chamber, wherein the feed liquid chamber is located between the acid chamber and the alkali chamber,
or wherein the wastewater treatment unit comprises at least one common electrodialyser and at least one bipolar membrane electrodialyser;
the membranes in the membrane unit of said common electrodialyser are an anion exchange membrane and a cation exchange membrane, and the anion exchange membrane and the cation exchange membrane divide the internal space of the membrane unit into a feed liquid chamber and a concentration chamber;
the membranes in the membrane unit of the bipolar membrane electrodialyser are a bipolar membrane, an anion exchange membrane and a cation exchange membrane, and the said bipolar membrane, the said anion exchange membrane and the said cation exchange membrane divide the internal space of the membrane unit into an acid chamber, a feed liquid chamber and an alkali chamber, wherein the feed liquid chamber is located between the acid chamber and the alkali chamber;
the common electrodialyser is used for carrying out an electrodialysis on the wastewater to produce a first desalted water and a concentrate having an increased content of organic ammonium ion, and the said bipolar membrane electrodialyser is used for carrying out a bipolar membrane electrodialysis on the concentrate to produce an acid liquor, an alkali liquor containing an organic ammonium ion and a second desalted water.

14. The system according to any one of Claim 12 or 13, wherein the system further comprises a pretreatment unit for contacting the wastewater with at least one precipitant so that at least a part of silicon in the wastewater form a colloid, and a solid-liquid separation is carried out to produce a silicon-containing solid phase and a liquid phase, and the said liquid phase is delivered into the wastewater treatment unit for electrodialysis.

15. The system according to any one of Claim 12 to Claim 14, wherein the wastewater treatment unit further comprises one, two of three selected from a delivery pipeline for desalted water, a delivery pipeline for recovering organic ammonium hydroxide and a delivery pipeline for recovering an acid liquor;
wherein
the said delivery pipeline for desalted water is used for delivering the desalted water recovered by the wastewater treatment unit into one of the following units: the said synthesis unit as water for synthesis; the said crystallization unit as water for termination of the crystallization; the said separation and washing unit as washing water;
the said delivery pipeline used for recovering organic ammonium hydroxide is used for delivering the alkali liquor containing organic ammonium hydroxide obtained from the bipolar membrane electrodialyser in the wastewater treatment unit into the synthesis unit;
the said delivery pipeline for recovering acid is used for delivering the acid liquor obtained from the bipolar membrane electrodialyser in the wastewater treatment unit into the said pretreatment unit at least in part as a precipitant.

## Patentansprüche

1. Verfahren Behandlung von Abwasser, das mindestens ein organisches Ammoniumion und optional Verunreinigungen wie lösliches Siliziumdioxid enthält,
wobei das Verfahren eine Elektrodialyse des optional vorbehandelten Abwassers umfasst, um entsalztes Wasser mit einem reduzierten Gehalt an organischen Ammoniumionen und ein Konzentrat, das ein organisches Ammoniumion enthält, zu erhalten,
wobei die Elektrodialyse in mindestens einem Elektrodialysator durchgeführt wird, der Membranstapel des Elektrodialysators mindestens eine Membraneinheit aufweist und die Membranen in mindestens einem Teil der Membraneinheit(en) eine homogene Kationenaustauschermembran vom Styroltyp umfassen,
wobei das organische Ammoniumion durch Formel I dargestellt wird, 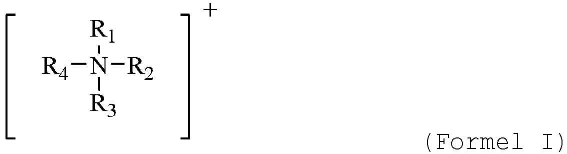
wobei in Formel I R₁, R₂, R₃ und R₄ unabhängig voneinander aus C₁-C₅-Alkyl und C₆-C₁₂-Aryl ausgewählt sind.

2. Verfahren gemäß Anspruch 1, wobei eines oder mehrere der folgenden Merkmale erfüllt sind:
das Verfahren umfasst einen Vorbehandlungsschritt, in welchem das Abwasser einer Fest-Flüssig-Separation unterzogen wird, um eine feste Phase und eine flüssige Phase zu erhalten, und die flüssige Phase wird zur Elektrodialyse einem Abwasserbehandlungsschritt zugeführt,
das Abwasser wird vor der Fest-Flüssig-Separation des Abwassers mit mindestens einem Fällungsmittel in Kontakt gebracht, sodass das Silizium in dem Abwasser ein Kolloid bildet, wobei das Fällungsmittel bevorzugt aus der Gruppe bestehend aus sauren, zweiwertigen, dreiwertigen und vierwertigen Metallsalzen, bevorzugter vierwertigen Metallsalzen, wie Titantetrachlorid und Titanylsulfat, ausgewählt ist,
der Membranoberflächenwiderstand der homogenen Kationenaustauschermembran vom Styroltyp beträgt 1-15 Ω·cm², bevorzugt 3-12 Ω·cm² und bevorzugter 4-9 Ω·cm²,
die Ionenaustauschkapazität der homogenen Kationenaustauschermembran vom Styroltyp beträgt 1-5 meq/g Trockenmembran, bevorzugt 1,5-3 meq/g Trockenmembran und bevorzugter 1,8-2,6 meq/g Trockenmembran,
die Elektrodialyse ist eine herkömmliche Elektrodialyse, die auf folgende Weise durchgeführt wird: die Membranen in der Membraneinheit sind eine Anionenaustauschermembran und eine Kationenaustauschermembran; die
Anionenaustauschermembran und die Kationenaustauschermembran teilen den Innenraum der Membraneinheit in eine Zufuhrflüssigkeitskammer und eine Konzentrationskammer; das Abwasser tritt in die Zufuhrflüssigkeitskammer ein und Wasser tritt in die Konzentrationskammer ein; während der Elektrodialyse wird das entsalzte Wasser aus der Zufuhrflüssigkeitskammer gewonnen und ein Konzentrat wird als alkalische Flüssigkeit aus der Konzentrationskammer gewonnen, oder
die Elektrodialyse ist eine bipolare Membranelektrodialyse, die bevorzugt nach einem, zwei oder drei der folgenden Verfahren durchgeführt wird:
Verfahren I: der Membranstapel des bipolaren Membranelektrodialysators weist mindestens eine Membraneinheit auf; die Membranen in der Membraneinheit sind eine bipolare Membran und eine Kationenaustauschermembran; die bipolare Membran und die Kationenaustauschermembran teilen den Innenraum der Membraneinheit in eine Alkalikammer und eine Zufuhrflüssigkeitskammer; das Abwasser oder die flüssige Phase tritt in die Zufuhrflüssigkeitskammer ein und Wasser tritt in die Alkalikammer ein; während der Elektrodialyse wird eine saure Flüssigkeit aus der Zufuhrflüssigkeitskammer gewonnen und eine alkalische Flüssigkeit, die ein organisches Ammoniumion enthält, wird aus der Alkalikammer gewonnen;
Verfahren II: der Membranstapel des bipolaren Membranelektrodialysators weist mindestens eine Membraneinheit auf; die Membranen in der Membraneinheit sind eine bipolare Membran und eine Anionenaustauschermembran; die bipolare Membran und die Anionenaustauschermembran teilen den Innenraum der Membraneinheit in eine Säurekammer und eine Zufuhrflüssigkeitskammer; das Abwasser oder die flüssige Phase tritt in die Zufuhrflüssigkeitskammer ein und Wasser tritt in die Säurekammer ein; während der Elektrodialyse wird eine alkalische Flüssigkeit, die ein organisches Ammoniumion enthält, aus der Zufuhrflüssigkeitskammer gewonnen und eine Säure wird aus der Säurekammer gewonnen;
Verfahren III: der Membranstapel des bipolaren Membranelektrodialysators weist mindestens eine Membraneinheit auf; die Membranen in der Membraneinheit sind eine bipolare Membran, eine Anionenaustauschermembran und eine Kationenaustauschermembran; die bipolare Membran, die Anionenaustauschermembran und die Kationenaustauschermembran teilen den Innenraum der Membraneinheit in eine Säurekammer, eine Zufuhrflüssigkeitskammer und eine Alkalikammer; die Zufuhrflüssigkeitskammer ist zwischen der Säurekammer und der Alkalikammer angeordnet; das Abwasser oder die flüssige Phase tritt in die Zufuhrflüssigkeitskammer ein und Wasser tritt in die Säurekammer beziehungsweise die Alkalikammer ein; während der Elektrodialyse wird entsalztes Wasser aus der Zufuhrflüssigkeitskammer gewonnen, eine saure Flüssigkeit wird aus der Säurekammer gewonnen und eine alkalische Flüssigkeit, die ein organisches Ammoniumion enthält, wird aus der Alkalikammer gewonnen,
das Konzentrat wird einer bipolaren Membranelektrodialyse unterzogen, um eine saure Flüssigkeit, eine alkalische Flüssigkeit, die ein organisches Ammoniumion enthält, und ein zweites entsalztes Wasser herzustellen.

3. Verfahren gemäß Anspruch 1 oder Anspruch 2, wobei eines oder mehrere der folgenden Merkmale erfüllt sind:
die Elektrodialyse umfasst eine herkömmliche Elektrodialyse und eine bipolare Membranelektrodialyse; die Membranen in der Membraneinheit der herkömmlichen Elektrodialyse sind eine Anionenaustauschermembran und eine Kationenaustauschermembran; die Anionenaustauschermembran und die Kationenaustauschmembran teilen den Innenraum der Membraneinheit in eine Zufuhrflüssigkeitskammer und eine Konzentrationskammer;
die Membranen in der Membraneinheit der bipolaren Membranelektrodialyse sind eine bipolare Membran, eine Anionenaustauschermembran und eine Kationenaustauschermembran; die bipolare Membran, die Anionenaustauschermembran und die Kationenaustauschermembran teilen den Innenraum der Membraneinheit in eine Säurekammer, eine Zufuhrflüssigkeitskammer und eine Alkalikammer; die Zufuhrflüssigkeitskammer ist zwischen der Säurekammer und der Alkalikammer angeordnet;
das Abwasser wird einer Elektrodialyse in der herkömmlichen Elektrodialyse unterzogen, um ein erstes entsalztes Wasser und ein Konzentrat, das einen erhöhten Gehalt an organischen Ammoniumionen aufweist, herzustellen; das Konzentrat wird einer bipolaren Membranelektrodialyse in der bipolaren Membranelektrodialyse unterzogen, um eine saure Flüssigkeit, eine alkalische Flüssigkeit und ein zweites entsalztes Wasser herzustellen,
die an jeder Membraneinheit der herkömmlichen Elektrodialyse während der Elektrodialyse angelegte Spannung beträgt 0,1-5 V, bevorzugt 0,5-4 V und bevorzugter 1-3 V; und/oder die an jeder Membraneinheit der bipolaren Membranelektrodialyse angelegte Spannung beträgt 0,1-8 V, bevorzugt 1-6 V und bevorzugter 2-5 V,
die Bedingungen der Elektrodialyse führen dazu, dass der Gehalt des organischen Ammoniumions in dem entsalztem Wasser 2000 mg/L oder weniger, bevorzugt 1000 mg/L oder weniger und bevorzugter 500 mg/L oder weniger beträgt,
die Konzentration des organischen Ammoniumions im Abwasser beträgt 1000-35000 mg/L, bevorzugt 2000-30000 mg/L und bevorzugter 10000-30000 mg/L,
das organische Ammoniumion ist Tetrapropylammoniumion.

4. Verfahren gemäß einem von Anspruch 1 bis Anspruch 3, wobei das Abwasser das Abwasser aus der Herstellung eines Molekularsiebs unter Verwendung von organischem Ammoniumhydroxid ist, bevorzugt eine Kristallisationsmutterlauge aus einem Kristallisationsschritt der Herstellung eines Molekularsiebs unter Verwendung von organischem Ammoniumhydroxid, Waschabwasser aus dem Waschschritt der Herstellung eines Molekularsiebs unter Verwendung von organischem Ammoniumhydroxid oder eine Mischung der Kristallisationsmutterlauge und des Waschabwassers, und das Molekularsieb bevorzugt mindestens eines ist, das aus der Gruppe bestehend aus einem Titansilikatmolekularsieb, BETA-Molekularsieb, SSZ-13-Molekularsieb und Silikat-1 ausgewählt ist,
das organische Ammoniumhydroxid bevorzugt aus der durch Formel II dargestellten Verbindung ausgewählt ist, 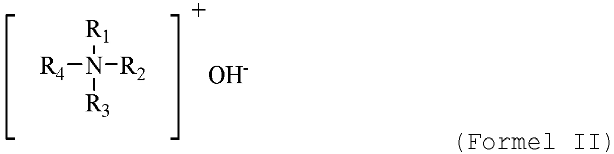
wobei in Formel II R₁, R₂, R₃ und R₄ unabhängig voneinander aus C₁-C₅-Alkyl und C₆-C₁₂-Aryl ausgewählt sind;
wobei das organische Ammoniumhydroxid bevorzugt. Tetrapropylammoniumhydroxid ist.

5. Abwasserbehandlungssystem (I) oder (II),
wobei das System (I) die folgenden Merkmale erfüllt:
das Abwasser ist das Abwasser, das ein organisches Ammoniumion enthält, aus der Herstellung eines Molekularsiebs, das Behandlungssystem umfasst eine Abwasserspeichereinheit, eine optionale Vorbehandlungseinheit, eine herkömmliche Elektrodialyseeinheit und eine bipolare Membranelektrodialyseeinheit, die in Reihe geschaltet sind,
wobei
die Abwasserspeichereinheit zur Aufnahme und Speicherung von Abwasser dient;
die optionale Vorbehandlungseinheit zur Kontaktierung des Abwassers aus der Abwasserspeichereinheit mit mindestens einem Fällungsmittel dient, sodass nachdem das Silizium im Abwasser ein Kolloid bildet, eine Fest-Flüssig-Separation durchgeführt wird, um eine flüssige Phase und eine feste Phase zu erhalten;
die herkömmliche Elektrodialyseeinheit dient zur Durchführung einer herkömmlichen Elektrodialyse des Abwassers oder der flüssigen Phase, um ein erstes entsalztes Wasser mit einem reduzierten Gehalt an organischen Ammoniumionen und ein Konzentrat, das ein organisches Ammoniumion enthält, zu erhalten;
die bipolare Membranelektrodialyseeinheit dient zur Durchführung einer bipolaren Membranelektrodialyse des aus der herkömmlichen Elektrodialyseeinheit abgegebenen Konzentrats, um eine saure Flüssigkeit, eine alkalische Flüssigkeit, die ein organisches Ammoniumion enthält, und optional ein zweites entsalztes Wasser zu erhalten,
wobei das organische Ammoniumion wie in Anspruch 1 definiert ist und die Membranen in mindestens einem Teil der Membraneinheit(en) eine homogene Kationenaustauschermembran vom Styroltyp umfassen;
wobei das System (II) die folgenden Merkmale erfüllt:
das Abwasser ist das Abwasser, das ein organisches Ammoniumion enthält, aus der Herstellung eines Molekularsiebs, das Behandlungssystem umfasst einen Entsalzungstank, einen Zwischensalztank, einen herkömmlichen Elektrodialysator, einen bipolaren Membranelektrodialysator, einen Tank für die alkalische Flüssigkeit, einen Tank für die saure Flüssigkeit und optional einen Entsalzungswassertank;
wobei
die Membranen in der Membraneinheit des herkömmlichen Elektrodialysators eine Kationenaustauschermembran und eine Anionenaustauschermembran sind, die den Innenraum der Membraneinheit in eine Zufuhrflüssigkeitskammer und eine Konzentrationskammer teilen; die Membranen in der Membraneinheit des bipolaren Membranelektrodialysators eine bipolare Membran, eine Kationenaustauschermembran und eine Anionenaustauschermembran sind, die den Innenraum der Membraneinheit in eine Zufuhrflüssigkeitskammer, eine Säurekammer und eine Alkalikammer teilen, wobei die Flüssigkeitskammer zwischen der Säurekammer und der Alkalikammer angeordnet ist;
der Entsalzungstank, der zur Aufnahme des Abwasser dient, mit der Zufuhrflüssigkeitskammer des herkömmlichen Elektrodialysators in der herkömmlichen Elektrodialyseeinheit in Verbindung steht und der Zufuhrflüssigkeitskammer Zufuhrwasser zuführt und optional einen Abfluss aus der Zufuhrflüssigkeitskammer aufnimmt;
der Zwischensalztank, der mit der Konzentrationskammer des Elektrodialysators in Verbindung steht, der Konzentrationskammer Zufuhrwasser zuführt und einen Abfluss aus der Konzentrationskammer aufnimmt, und die Zufuhrflüssigkeitskammer des bipolaren Membranelektrodialysators mit dem Zwischensalztank in Verbindung steht, um ein aus dem Zwischensalztank abgegebenes Konzentrat als Zufuhrwasser aufzunehmen;
der Tank für die alkalische Flüssigkeit mit der Alkalikammer des bipolaren Membranelektrodialysators in Verbindung steht, um eine alkalische Flüssigkeit aufzunehmen, die aus der Alkalikammer des bipolaren Membranelektrodialysators abgegeben wird, und der Alkalikammer des bipolaren Membranelektrodialysators Zufuhrwasser zuführt;
der Tank für die saure Flüssigkeit mit der Säurekammer des bipolaren Membranelektrodialysators in Verbindung steht, um eine saure Flüssigkeit aufzunehmen, die aus der Säurekammer des bipolaren Membranelektrodialysators abgegeben wird, und der Säurekammer des bipolaren Membranelektrodialysators Zufuhrwasser zuführt;
der Entsalzungswassertank mit dem Tank für die alkalische Flüssigkeit und dem Tank für die saure Flüssigkeit und mit dem Entsalzungstank oder mit der Zufuhrflüssigkeitskammer des Elektrodialysators in Verbindung steht, um das erste entsalzte Wasser aufzunehmen, das aus dem Entsalzungstank abgegeben wird, oder um das erste entsalzte Wasser aufzunehmen, das aus der Zufuhrflüssigkeitskammer des Elektrodialysators abgegeben wird, während er dem Tank für die alkalische Flüssigkeit und dem Tank für die saure Flüssigkeit Zufuhrwasser zuführt,
wobei das organische Ammoniumion wie in Anspruch 1 definiert ist, und
die Kationenaustauschermembran eine homogene Kationenaustauschermembran vom Styroltyp ist.

6. System gemäß Anspruch 5, wobei für das System (I) eines oder mehrere der folgenden Merkmale erfüllt sind:
die herkömmliche Elektrodialyseeinheit umfasst mindestens einen herkömmlichen Elektrodialysator, wobei der Membranstapel des herkömmlichen Elektrodialysators mindestens eine Membraneinheit aufweist, die Membranen in mindestens einem Teil der Membraneinheit eine Kationenaustauschermembran und eine Anionenaustauschermembran sind, und die Kationenaustauschermembran und die Anionenaustauschermembran den Innenraum der Membraneinheit in eine Zufuhrflüssigkeitskammer und eine Konzentrationskammer teilen,
die bipolare Membranelektrodialyseeinheit umfasst mindestens einen bipolaren Membranelektrodialysator, dessen Membraneinheit eine, zwei oder drei der folgenden Verfahren anwendet:
Verfahren 1: die Membranen in der Membraneinheit sind eine bipolare Membran und eine Kationenaustauschermembran, und die bipolare Membran und die Kationenaustauschermembran teilen den Innenraum der Membraneinheit in eine Alkalikammer und eine Zufuhrflüssigkeitskammer;
Verfahren 2: die Membranen in der Membraneinheit sind eine bipolare Membran und eine Anionenaustauschermembran, und die bipolare Membran und die Anionenaustauschermembran teilen den Innenraum der Membraneinheit in eine Säurekammer und eine Zufuhrflüssigkeitskammer;
Verfahren 3: die Membranen in der Membraneinheit sind eine bipolare Membran, eine Anionenaustauschermembran und eine Kationenaustauschermembran, und die bipolare Membran, die Anionenaustauschermembran und die Kationenaustauschermembran teilen den Innenraum der Membraneinheit in eine Säurekammer, eine Zufuhrflüssigkeitskammer und eine Alkalikammer, wobei die Zufuhrflüssigkeitskammer zwischen der Säurekammer und der Alkalikammer angeordnet ist,
das System umfasst ferner eine erste Zykluseinheit und/oder eine zweite Zykluseinheit;
wobei
die erste Zykluseinheit dazu dient, eine saure Flüssigkeit, die aus der bipolaren Membranelektrodialyseeinheit abgegeben wird, zumindest teilweise als ein Fällungsmittel in die Vorbehandlungseinheit zu leiten;
die zweite Zykluseinheit dazu dient, das erste entsalzte Wasser und/oder das zweite entsalzte Wasser in die herkömmliche Elektrodialyseeinheit und/oder die bipolare Membranelektrodialyseeinheit als Wasser für die herkömmliche Elektrodialyse und/oder die bipolare Membranelektrodialyse zu leiten.

7. System gemäß Anspruch 5, wobei das System (II) ferner eine Vorbehandlungseinheit umfasst, die dem Entsalzungstank vorgeschaltet ist, um das Abwasser mit mindestens einem Fällungsmittel in Kontakt zu bringen, sodass eine Fest-Flüssig-Separation durchgeführt werden kann, nachdem Silizium im Abwasser ein Kolloid bildet, und die bei der Fest-Flüssig-Separation entstandene flüssige Phase in den Entsalzungstank geleitet wird.

8. System gemäß Anspruch 5 oder Anspruch 6, wobei das System (II) ferner einen Tank zur Rückgewinnung von organischem Ammoniumhydroxid und einen Tank zur Rückgewinnung von Säure umfasst;
wobei
der Tank zur Rückgewinnung von organischem Ammoniumhydroxid zur Aufnahme der aus dem Alkalitank abgegebenen alkalischen Flüssigkeit dient;
der Tank zur Rückgewinnung von Säure zur Aufnahme der aus dem Säuretank abgegebenen sauren Flüssigkeit dient;
der Tank zur Rückgewinnung von Säure bevorzugt mit der Vorbehandlungseinheit in Verbindung steht, um die saure Flüssigkeit zumindest teilweise als Fällungsmittel in die Vorbehandlungseinheit zu leiten;
der Tank zur Rückgewinnung von organischem Ammoniumhydroxid mit der Syntheseeinheit in Verbindung steht, um die organisches Ammoniumhydroxid enthaltende alkalische Flüssigkeit in die Syntheseeinheit zu leiten;
der Entsalzungswassertank mit einer, zwei oder drei der folgenden Einheiten in Verbindung steht: der Syntheseeinheit, um der Syntheseeinheit Wasser für die Synthese zuzuführen; der Kristallisationseinheit, um der Kristallisationseinheit Wasser für die Beendigung der Kristallisation zuzuführen; der Separations- und Wascheinheit, um der Separations- und Wascheinheit Waschwasser zuzuführen, wobei sich die Syntheseeinheit, die Kristallisationseinheit und die Separations- und Wascheinheit auf Einheiten beziehen, die bei der Herstellung des Molekularsiebs verwendet werden.

9. System gemäß Anspruch 5, wobei der Membranoberflächenwiderstand der homogenen Kationenaustauschermembran vom Styroltyp 1-15 Ω·cm², bevorzugt 3-12 Ω·cm² und bevorzugter 4-9 Ω·cm² beträgt; und/oder die Ionenaustauschkapazität der homogenen Kationenaustauschermembran vom Styroltyp 1-5 meq/g Trockenmembran, bevorzugt 1,5-3 meq/g Trockenmembran und bevorzugter 1,8-2,6 meq/g Trockenmembran beträgt.

10. Verfahren zur Herstellung eines Molekularsiebs, umfassend einen Syntheseschritt, einen Kristallisationsschritt, einen Separations- und Waschschritt und einen Abwasserbehandlungsschritt;
wobei
in dem Syntheseschritt ein Rohmaterial mit Wasser zur Reaktion in Kontakt gebracht wird, wobei das Rohmaterial eine Siliziumquelle, ein organisches Ammoniumhydroxid und optional eine Titanquelle enthält;
in dem Kristallisationsschritt die aus dem Syntheseschritt erhaltene Reaktionsmischung kristallisiert wird;
in dem Separations- und Waschschritt die aus dem Kristallisationsschritt erhaltene Mischung einer Fest-Flüssig-Separation zugeführt wird, um eine feste Phase und eine Kristallisationsmutterlauge herzustellen, und die feste Phase gewaschen wird, um ein Molekularsieb und Waschabwasser zu erhalten;
in dem Verfahren zur Abwasserbehandlung eine alkalische Flüssigkeit, die ein organisches Ammoniumion enthält, und entsalztes Wasser mit einem reduzierten Gehalt an organischem Ammoniumion durch eine Elektrodialyse des Abwassers hergestellt werden, und das Abwasser die Kristallisationsmutterlauge, das Waschabwasser oder ein Gemisch aus der Kristallisationsmutterlauge und dem Waschabwasser ist, wobei das Abwasser unter Verwendung des Verfahrens gemäß einem von Anspruch 1 bis Anspruch 4 behandelt wird,
wobei das organische Ammoniumion wie in Anspruch 1 definiert ist.

11. Verfahren gemäß Anspruch 10, wobei das Verfahren ferner einen, zwei oder drei aus dem ersten zyklischen Schritt, dem zweiten zyklischen Schritt und dem dritten zyklischen Schritt umfasst:
wobei
in dem ersten zyklischen Schritt das entsalzte Wasser in einem der folgenden Schritte recycelt wird: als Wasser für die Synthese in dem Syntheseschritt; zur Beendigung der Kristallisation in dem Kristallisationsschritt; als Waschwasser in dem Separations- und Waschschritt;
in dem zweiten zyklischen Schritt, die aus der Elektrodialyse gewonnene alkalische Flüssigkeit in dem Syntheseschritt recycelt wird;
in dem dritten zyklischen Schritt, die in Gegenwart einer bipolaren Membranelektrodialyse erhaltene saure Flüssigkeit in dem Vorbehandlungsschritt zumindest teilweise als Fällungsmittel recycelt wird.

12. System zur Herstellung eines Molekularsiebs, das eine Syntheseeinheit, eine Kristallisationseinheit, eine Separations- und Wascheinheit und eine Abwasserbehandlungseinheit umfasst;
wobei
die Syntheseeinheit dazu dient, ein Rohmaterial mit Wasser zur Reaktion in Kontakt zu bringen, und das Rohmaterial eine Siliziumquelle, ein organisches Ammoniumhydroxid und optional eine Titanquelle enthält;
die Kristallisationseinheit zur Kristallisation der in dem Syntheseschritt erhaltenen Reaktionsmischung dient;
die Separations- und Wascheinheit zur Fest-Flüssig-Separation der in dem Kristallisationsschritt erhaltenen Mischung dient, um eine feste Phase und eine Kristallisationsmutterlauge zu erzeugen, und die feste Phase gewaschen wird, um ein Molekularsieb und Waschabwasser zu erhalten;
die Abwasserbehandlungseinheit zur Elektrodialyse des Abwassers dient, um eine alkalische Flüssigkeit, die ein organisches Ammoniumion enthält, und entsalztes Wasser mit einem reduzierten Gehalt an organischen Ammoniumionen zu erzeugen, wobei das Abwasser die Kristallisationsmutterlauge, das Waschabwasser oder eine Mischung aus der Kristallisationsmutterlauge und dem Waschabwasser ist, wobei die Elektrodialyse in mindestens einem Elektrodialysator durchgeführt wird, der Membranstapel des Elektrodialysators mindestens eine Membraneinheit aufweist und die Membranen in mindestens einem Teil der Membraneinheit eine homogene Kationenaustauschermembran vom Styroltyp umfassen,
wobei das organische Ammoniumion wie in Anspruch 1 definiert ist.

13. System gemäß Anspruch 12, wobei der Elektrodialysator mindestens ein herkömmlicher Elektrodialysator ist; die Membranen in der Membraneinheit des herkömmlichen Elektrodialysators auf folgende Weise kombiniert sind:
die Membranen in der Membraneinheit sind eine Anionenaustauschermembran und eine Kationenaustauschermembran; die Anionenaustauschermembran und die Kationenaustauschermembran teilen den Innenraum der Membraneinheit in eine Zufuhrflüssigkeitskammer und eine Konzentrationskammer; die Zufuhrflüssigkeitskammer nimmt das Abwasser auf,
oder wobei der Elektrodialysator mindestens ein bipolarer Membranelektrodialysator ist; die Membraneinheit des bipolaren Membranelektrodialysators eine, zwei oder drei der folgenden Verfahren anwendet:
Verfahren 1: die Membranen in der Membraneinheit sind eine bipolare Membran und eine Kationenaustauschermembran, und die bipolare Membran und die Kationenaustauschermembran teilen den Innenraum der Membraneinheit in eine Alkalikammer und eine Zufuhrflüssigkeitskammer;
Verfahren 2: die Membranen in der Membraneinheit sind eine bipolare Membran und eine Anionenaustauschermembran, und die bipolare Membran und die Anionenaustauschermembran teilen den Innenraum der Membraneinheit in eine Säurekammer und eine Zufuhrflüssigkeitskammer;
Verfahren 3: die Membranen in der Membraneinheit sind eine bipolare Membran, eine Anionenaustauschermembran und eine Kationenaustauschermembran, und die bipolare Membran, die Anionenaustauschermembran und die Kationenaustauschermembran teilen den Innenraum der Membraneinheit in eine Säurekammer, eine Zufuhrflüssigkeitskammer und eine Alkalikammer, wobei die Zufuhrflüssigkeitskammer zwischen der Säurekammer und der Alkalikammer angeordnet ist,
oder wobei die Abwasserbehandlungseinheit mindestens einen herkömmlichen Elektrodialysator und mindestens einen bipolaren Membranelektrodialysator umfasst;
die Membranen in der Membraneinheit des herkömmlichen Elektrodialysators eine Anionenaustauschermembran und eine Kationenaustauschermembran sind, und die Anionenaustauschermembran und die Kationenaustauschermembran den Innenraum der Membraneinheit in eine Zufuhrflüssigkeitskammer und eine Konzentrationskammer teilen;
die Membranen in der Membraneinheit des bipolaren Membranelektrodialysators eine bipolare Membran, eine Anionenaustauschermembran und eine Kationenaustauschermembran sind, und die bipolare Membran, die Anionenaustauschermembran und die Kationenaustauschermembran den Innenraum der Membraneinheit in eine Säurekammer, eine Zufuhrflüssigkeitskammer und eine Alkalikammer teilen, wobei die Zufuhrflüssigkeitskammer zwischen der Säurekammer und der Alkalikammer angeordnet ist;
der herkömmliche Elektrodialysator zur Durchführung einer Elektrodialyse des Abwassers dient, um ein erstes entsalztes Wasser und ein Konzentrat mit einem erhöhten Gehalt an organischen Ammoniumionen herzustellen, und der bipolare Membranelektrodialysator zur Durchführung einer bipolaren Membranelektrodialyse des Konzentrats dient, um eine saure Flüssigkeit, eine alkalische Flüssigkeit, die ein organisches Ammoniumion enthält, und ein zweites entsalztes Wasser herzustellen.

14. System gemäß einem von Anspruch 12 oder 13, wobei das System ferner eine Vorbehandlungseinheit umfasst, um das Abwasser mit mindestens einem Fällungsmittel in Kontakt zu bringen, sodass mindestens ein Teil des Siliziums im Abwasser ein Kolloid bildet, und eine Fest-Flüssig-Separation durchgeführt wird, um eine siliziumhaltige feste Phase und eine flüssige Phase herzustellen, und die flüssige Phase zur Elektrodialyse in die Abwasserbehandlungseinheit geleitet wird.

15. System gemäß einem von Anspruch 12 bis Anspruch 14, wobei die Abwasserbehandlungseinheit ferner eine, zwei oder drei ausgewählt aus einer Förderleitung für entsalztes Wasser, eine Förderleitung zur Rückgewinnung von organischem Ammoniumhydroxid und eine Förderleitung zur Rückgewinnung einer sauren Flüssigkeit umfasst;
wobei
die Förderleitung für entsalztes Wasser dazu dient, das von der Abwasserbehandlungseinheit zurückgewonnene entsalzte Wasser in eine der folgenden Einheiten zu leiten: die Syntheseeinheit als Wasser für die Synthese; die Kristallisationseinheit als Wasser für die Beendigung der Kristallisation; die Separations- und Wascheinheit als Waschwasser;
die Förderleitung zur Rückgewinnung von organischem Ammoniumhydroxid dazu dient, die organisches Ammoniumhydroxid enthaltende alkalische Flüssigkeit, die aus dem bipolaren Membranelektrodialysator in der Abwasserbehandlungseinheit gewonnen wird, in die Syntheseeinheit zu leiten;
die Förderleitung für die Rückgewinnung von Säure dazu dient, die aus dem bipolaren Membranelektrodialysator in der Abwasserbehandlungseinheit gewonnene saure Flüssigkeit zumindest teilweise als ein Fällungsmittel in die Vorbehandlungseinheit zu leiten.

## Revendications

1. Procédé de traitement d'eaux usées contenant au moins un ion ammonium organique et facultativement des impuretés telles qu'une silice soluble,
lequel procédé comprend une électrodialyse des eaux usées facultativement prétraitées pour obtenir une eau dessalée présentant une teneur réduite en ion ammonium organique et un concentré contenant un ion ammonium organique,
dans lequel l'électrodialyse est effectuée dans au moins un électrodialyseur, l'empilement de membranes de l'électrodialyseur présente au moins une unité à membranes, et les membranes dans au moins une partie de l'unité ou des unités à membranes comprennent une membrane homogène échangeuse de cations de type styrène,
dans lequel l'ion ammonium organique est représenté par la formule I, 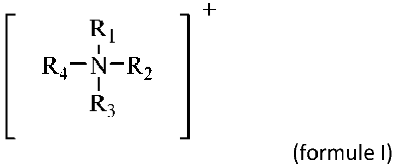
dans la formule I, R₁, R₂, R₃ et R₄ sont sélectionnés indépendamment parmi un alkyle en C₁-C₅, et un aryle en C₆-C₁₂.

2. Procédé selon la revendication 1, une ou plusieurs des caractéristiques suivantes sont satisfaites :
le procédé comprend une étape de prétraitement, dans laquelle les eaux usées sont soumises à une séparation solide-liquide pour obtenir une phase solide et une phase liquide, et ladite phase liquide est délivrée à une étape de traitement d'eaux usées à des fins d'électrodialyse,
les eaux usées sont mises en contact avec au moins un précipitant avant la séparation solide-liquide des eaux usées pour que le silicium dans les eaux usées forme un colloïde, dans lequel le précipitant est sélectionné de préférence dans le groupe consistant en un acide, les sels de métaux divalents, trivalents et tétravalents, plus préférentiellement les sels de métaux tétravalents, tels que le tétrachlorure de titane et le sulfate de titanyle,
la résistance en surface de membrane de la membrane homogène échangeuse de cations de type styrène est de 1-15 Ω cm2, de préférence de 3-12 Ω cm2 et plus préférentiellement de 4-9 Ω cm2,
la capacité d'échange d'ions de la membrane homogène échangeuse de cations de type styrène est de 1-5 méq/g de membrane sèche, de préférence de 1,5-3 méq/g de membrane sèche et plus préférentiellement de 1,8-2,6 méq/g de membrane sèche,
l'électrodialyse est une électrodialyse ordinaire effectuée de la manière suivante : les membranes dans l'unité à membranes sont une membrane échangeuse d'anions et une membrane échangeuse de cations; la membrane échangeuse d'anions et la membrane échangeuse de cations divisent l'espace interne de l'unité à membranes en une chambre de liquide d'alimentation et une chambre de concentration ; les eaux usées entrent dans la chambre de liquide d'alimentation et l'eau entre dans la chambre de concentration ; ladite eau dessalée est obtenue à partir de la chambre de liquide d'alimentation et un concentré sous forme de liqueur alcaline est obtenu à partir de ladite chambre de concentration pendant l'électrodialyse, ou
l'électrodialyse est une électrodialyse à membrane bipolaire qui est effectuée de préférence selon un, deux ou trois des procédés suivants :
Procédé I : l'empilement de membranes de l'électrodialyseur à membrane bipolaire présente au moins une unité à membranes ; les membranes dans l'unité à membranes sont une membrane bipolaire et une membrane échangeuse de cations ; ladite membrane bipolaire et la membrane échangeuse de cations divisent l'espace interne de l'unité à membranes en une chambre pour alcalin et une chambre de liquide d'alimentation ; lesdites eaux usées ou ladite phase liquide entrent dans la chambre de liquide d'alimentation et l'eau entre dans ladite chambre pour alcalin ; une liqueur acide est obtenue à partir de la chambre de liquide d'alimentation et une liqueur alcaline contenant un ion ammonium organique est obtenue à partir de la chambre pour alcalin pendant l'électrodialyse ;
Procédé II : l'empilement de membranes de l'électrodialyseur à membrane bipolaire présente au moins une unité à membranes ; les membranes dans l'unité à membranes sont une membrane bipolaire et une membrane échangeuse d'anions ; ladite membrane bipolaire et la membrane échangeuse d'anions divisent l'espace interne de l'unité à membranes en une chambre pour acide et une chambre de liquide d'alimentation ; lesdites eaux usées ou ladite phase liquide entrent dans la chambre de liquide d'alimentation et l'eau entre dans ladite chambre pour acide ; une liqueur alcaline contenant un ion ammonium organique est obtenue à partir de la chambre de liquide d'alimentation et un acide est obtenu à partir de la chambre pour acide pendant l'électrodialyse ;
Procédé III : l'empilement de membranes de l'électrodialyseur à membrane bipolaire présente au moins une unité à membranes ; les membranes dans l'unité à membranes sont une membrane bipolaire, une membrane échangeuse d'anions et une membrane échangeuse de cations ; ladite membrane bipolaire, la membrane échangeuse d'anions et la membrane échangeuse de cations divisent l'espace interne de l'unité à membranes en une chambre pour acide, une chambre de liquide d'alimentation et une chambre pour alcalin ; la chambre de liquide d'alimentation est située entre la chambre pour acide et la chambre pour alcalin ; lesdites eaux usées ou ladite phase liquide entrent dans la chambre de liquide d'alimentation et l'eau entre respectivement dans ladite chambre pour acide et dans la chambre pour alcalin ; de l'eau dessalée est obtenue à partir de la chambre de liquide d'alimentation, une liqueur acide est obtenue à partir de la chambre pour acide et une liqueur alcaline contenant un ion ammonium organique est obtenue à partir de la chambre pour alcalin pendant l'électrodialyse ;
le concentré est soumis à une électrodialyse à membrane bipolaire pour produire une liqueur acide, une liqueur alcaline contenant un ion ammonium organique et une seconde eau dessalée.

3. Procédé selon la revendication 1 ou la revendication 2, dans lequel une ou plusieurs des caractéristiques suivantes sont satisfaites :
l'électrodialyse comprend une électrodialyse ordinaire et une électrodialyse à membrane bipolaire; les membranes dans l'unité à membranes de l'électrodialyse ordinaire sont une membrane échangeuse d'anions et une membrane échangeuse de cations ; ladite membrane échangeuse d'anions et la membrane échangeuse de cations divisent l'espace interne de l'unité à membranes en une chambre de liquide d'alimentation et une chambre de concentration ;
les membranes dans l'unité à membranes de l'électrodialyse à membrane bipolaire sont une membrane bipolaire, une membrane échangeuse d'anions et une membrane échangeuse de cations ; ladite membrane bipolaire, ladite membrane échangeuse d'anions et ladite membrane échangeuse de cations divisent l'espace interne de l'unité à membranes en une chambre pour acide, une chambre de liquide d'alimentation et une chambre pour alcalin ; la chambre de liquide d'alimentation est située entre la chambre pour acide et la chambre pour alcalin ;
lesdites eaux usées sont soumises à une électrodialyse dans l'électrodialyse ordinaire pour produire une première eau dessalée et un concentré présentant une teneur accrue en ion ammonium organique; ledit concentré est soumis à une électrodialyse à membrane bipolaire dans l'électrodialyse à membrane bipolaire pour produire une liqueur acide, une liqueur alcaline et une seconde eau dessalée,
la tension appliquée à chaque unité à membranes de l'électrodialyse ordinaire pendant l'électrodialyse est de 0,1-5 V, de préférence de 0,5-4 V et plus préférentiellement de 1-3 V ; et/ou la tension appliquée à chaque unité à membranes de l'électrodialyse à membrane bipolaire est de 0,1-8 V, de préférence de 1-6 V et plus préférentiellement de 2-5 V,
les conditions de l'électrodialyse amènent la teneur en ion ammonium organique dans l'eau dessalée à 2000 mg/l ou moins, de préférence à 1000 mg/l ou moins, et plus préférentiellement à 500 mg/l ou moins,
la concentration en ion ammonium organique dans les eaux usées est de 1000-35 000 mg/l, de préférence de 2000-30 000 mg/l et plus préférentiellement de 10 000-30 000 mg/l,
ledit ion ammonium organique est un ion tétrapropylammonium.

4. Procédé selon l'une quelconque des revendications 1 à 3, dans lequel les eaux usées sont des eaux usées provenant de la préparation d'un tamis moléculaire utilisant un hydroxyde d'ammonium organique, de préférence une liqueur mère de cristallisation provenant d'une étape de cristallisation dans la préparation d'un tamis moléculaire utilisant un hydroxyde d'ammonium organique, des eaux usées de lavage provenant de l'étape de lavage dans la préparation d'un tamis moléculaire utilisant un hydroxyde d'ammonium organique, ou un mélange de ladite liqueur mère de cristallisation et desdites eaux usées de lavage, et le tamis moléculaire est de préférence au moins un sélectionné dans le groupe consistant en un tamis moléculaire de silicate de titane, un tamis moléculaire BETA, un tamis moléculaire SSZ-13 et un Silicate-1,
de préférence l'hydroxyde d'ammonium organique est sélectionné parmi le composé représenté par la formule II, 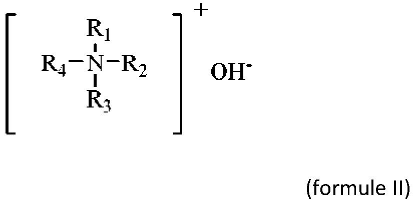
dans la formule II, R₁, R₂, R₃ et R₄ sont sélectionnés indépendamment parmi un alkyle en C₁-C₅, et un aryle en C₆-C₁₂ ;
de préférence, ledit hydroxyde d'ammonium organique est l'hydroxyde de tétrapropylammonium.

5. Système (1) ou (II) de traitement des eaux usées,
dans lequel le système (1) comprend les caractéristiques suivantes :
les eaux usées sont des eaux usées contenant un ion ammonium organique provenant de la préparation d'un tamis moléculaire, le système de traitement comprenant une unité de stockage d'eaux usées, une unité de prétraitement facultative, une unité d'électrodialyse ordinaire et une unité d'électrodialyse à membrane bipolaire raccordées en série ;
dans lequel
l'unité de stockage d'eaux usées est utilisée pour recevoir et stocker des eaux usées ;
l'unité de prétraitement facultative est utilisée pour mettre en contact les eaux usées provenant de l'unité de stockage d'eaux usées avec au moins un précipitant pour que, ensuite, le silicium dans les eaux usées forme un colloïde, une séparation solide-liquide est effectuée pour obtenir une phase liquide et une phase solide ;
l'unité d'électrodialyse ordinaire est utilisée pour effectuer une électrodialyse ordinaire sur les eaux usées ou sur ladite phase liquide pour obtenir une première eau dessalée présentant une teneur réduite en ion ammonium organique et un concentré contenant un ion ammonium organique ;
l'unité d'électrodialyse à membrane bipolaire est utilisée pour effectuer une électrodialyse à membrane bipolaire sur le concentré évacué de l'unité d'électrodialyse ordinaire pour obtenir une liqueur acide, une liqueur alcaline contenant un ion ammonium organique et une seconde eau dessalée facultative,
dans lequel l'ion ammonium organique est tel que défini dans la revendication 1, et les membranes dans au moins une partie de l'unité ou des unités à membranes comprennent une membrane homogène échangeuse de cations de type styrène ;
dans lequel le système (II) comprend les caractéristiques suivantes :
les eaux usées sont des eaux usées contenant un ion ammonium organique provenant de la préparation d'un tamis moléculaire, le système de traitement comprenant une cuve de dessalement, une cuve de sel intermédiaire, un électrodialyseur ordinaire, un électrodialyseur à membrane bipolaire, une cuve de liqueur alcaline, une cuve de liqueur acide et une cuve d'eau dessalée facultative ;
dans lequel
les membranes dans l'unité à membranes de l'électrodialyseur ordinaire sont une membrane échangeuse de cations et une membrane échangeuse d'anions qui divisent l'espace interne de l'unité à membranes en une chambre de liquide d'alimentation et une chambre de concentration ; les membranes dans l'unité à membranes de l'électrodialyseur à membrane bipolaire sont une membrane bipolaire, une membrane échangeuse de cations et une membrane échangeuse d'anions qui divisent l'espace interne de l'unité à membranes en une chambre de liquide d'alimentation, une chambre pour acide et une chambre pour alcalin, dans lequel la chambre de liquide est située entre ladite chambre pour acide et ladite chambre pour alcalin ;
la cuve de dessalement qui est utilisée pour recevoir des eaux usées est en communication avec la chambre de liquide d'alimentation de l'électrodialyseur ordinaire dans l'unité d'électrodialyse ordinaire et fournit une eau d'alimentation à la chambre de liquide d'alimentation et reçoit facultativement un effluent provenant de la chambre de liquide d'alimentation ;
la cuve de sel intermédiaire qui est en communication avec la chambre de concentration de l'électrodialyseur fournit une eau d'alimentation à la chambre de concentration et reçoit un effluent provenant de la chambre de concentration, et la chambre de liquide d'alimentation de l'électrodialyseur à membrane bipolaire est en communication avec la cuve de sel intermédiaire pour recevoir un concentré évacué à partir de la cuve de sel intermédiaire en tant qu'eau d'alimentation ;
ladite cuve de liqueur alcaline est en communication avec la chambre pour alcalin de l'électrodialyseur à membrane bipolaire pour recevoir une liqueur alcaline évacuée à partir de la chambre pour alcalin de l'électrodialyseur à membrane bipolaire et fournit une eau d'alimentation à la chambre pour alcalin de l'électrodialyseur à membrane bipolaire ;
ladite cuve de liqueur acide est en communication avec la chambre pour acide de l'électrodialyseur à membrane bipolaire pour recevoir une liqueur acide évacuée à partir de la chambre pour acide de l'électrodialyseur à membrane bipolaire, et fournit une eau d'alimentation à la chambre pour acide de l'électrodialyseur à membrane bipolaire ;
la cuve d'eau dessalée est en communication avec la cuve de liqueur alcaline et la cuve de liqueur acide et avec la cuve de dessalement ou avec la chambre de liquide d'alimentation de l'électrodialyseur pour recevoir la première eau dessalée évacuée à partir de la cuve de dessalement ou pour recevoir la première eau dessalée évacuée à partir de la chambre de liquide d'alimentation de l'électrodialyseur, tout en fournissant une eau d'alimentation à ladite cuve de liqueur alcaline et à ladite cuve de liqueur acide,
dans lequel l'ion ammonium organique est tel que défini dans la revendication 1, et
la membrane échangeuse de cations est une membrane homogène échangeuse de cations de type styrène.

6. Système selon la revendication 5, dans lequel une ou plusieurs des caractéristiques suivantes sont satisfaites pour le système (I) :
l'unité d'électrodialyse ordinaire comprend au moins un électrodialyseur ordinaire dans lequel l'empilement de membranes dudit électrodialyseur ordinaire présente au moins une unité à membranes, les membranes dans au moins une partie de l'unité à membranes sont une membrane échangeuse de cations et une membrane échangeuse d'anions, et ladite membrane échangeuse de cations et ladite membrane échangeuse d'anions divisent l'espace interne de l'unité à membranes en une chambre de liquide d'alimentation et une chambre de concentration,
l'unité d'électrodialyse à membrane bipolaire comprend au moins un électrodialyseur à membrane bipolaire, dont l'unité à membranes adopte un, deux ou trois des procédés suivants :
Procédé 1 : les membranes dans l'unité à membranes sont une membrane bipolaire et une membrane échangeuse de cations, et ladite membrane bipolaire et ladite membrane échangeuse de cations divisent l'espace interne de l'unité à membranes en une chambre pour alcalin et une chambre de liquide d'alimentation ;
Procédé 2 : les membranes dans l'unité à membranes sont une membrane bipolaire et une membrane échangeuse d'anions, et ladite membrane bipolaire et ladite membrane échangeuse d'anions divisent l'espace interne de l'unité à membranes en une chambre pour acide et une chambre de liquide d'alimentation ;
Procédé 3 : les membranes dans l'unité à membranes sont une membrane bipolaire, une membrane échangeuse d'anions et une membrane échangeuse de cations, et ladite membrane bipolaire, ladite membrane échangeuse d'anions et ladite membrane échangeuse de cations divisent l'espace interne de l'unité à membranes en une chambre pour acide, une chambre de liquide d'alimentation et une chambre pour alcalin, dans lequel la chambre de liquide d'alimentation est située entre ladite chambre pour acide et ladite chambre pour alcalin,
le système comprend en outre une première unité de cycle et/ou une seconde unité de cycle ;
dans lequel
ladite première unité de cycle est utilisée pour délivrer une liqueur acide évacuée à partir de l'unité d'électrodialyse à membrane bipolaire à l'unité de prétraitement au moins en partie comme précipitant ;
ladite seconde unité de cycle est utilisée pour délivrer la première eau dessalée et/ou la seconde eau dessalée à l'unité d'électrodialyse ordinaire et/ou à l'unité d'électrodialyse à membrane bipolaire en tant qu'eau pour l'électrodialyse ordinaire et/ou l'électrodialyse à membrane bipolaire.

7. Système selon la revendication 5, dans lequel le système (II) comprend en outre une unité de prétraitement qui est située en amont de la cuve de dessalement pour mettre en contact les eaux usées avec au moins un précipitant pour qu'une séparation solide-liquide puisse être effectuée après que le silicium dans les eaux usées a formé un colloïde, et la phase liquide produite à partir de la séparation solide-liquide est délivrée à la cuve de dessalement.

8. Système selon la revendication 5 ou la revendication 6, dans lequel le système (II) comprend en outre une cuve de récupération d'hydroxyde d'ammonium organique et une cuve de récupération d'acide ;
dans lequel
dans lequel ladite cuve de récupération d'hydroxyde d'ammonium organique est utilisée pour recevoir la liqueur alcaline évacuée à partir de la cuve de liqueur alcaline ;
ladite cuve de récupération d'acide sert à recevoir la liqueur acide évacuée à partir de la cuve de liqueur acide ;
de préférence dans lequel ladite cuve de récupération d'acide est en communication avec l'unité de prétraitement pour délivrer au moins une partie de la liqueur acide à l'unité de prétraitement en tant que précipitant ;
ladite cuve de récupération d'hydroxyde d'ammonium organique est en communication avec l'unité de synthèse pour délivrer la liqueur alcaline contenant un hydroxyde d'ammonium organique à l'unité de synthèse ;
ladite cuve d'eau dessalée est en communication avec une, deux ou trois des unités suivantes : ladite unité de synthèse pour fournir une eau pour synthèse à l'unité de synthèse ; ladite unité de cristallisation pour fournir une eau pour terminer la cristallisation à l'unité de cristallisation ; ladite unité de séparation et de lavage pour fournir une eau de lavage à l'unité de séparation et de lavage, dans lequel lesdites unité de synthèse, unité de cristallisation et unité de séparation et de lavage font référence aux unités comprises dans la préparation du tamis moléculaire.

9. Système selon la revendication 5, dans lequel la résistance en surface de membrane de la membrane homogène échangeuse de cations de type styrène est de 1-15 Ω cm², de préférence de 3-12 Ω cm² et plus préférentiellement de 4-9 Ω cm² ; et/ou la capacité d'échange d'ions de la membrane homogène échangeuse de cations de type styrène est de 1-5 méq/g de membrane sèche, de préférence de 1,5-3 méq/g de membrane sèche, et plus préférentiellement de 1,8-2,6 méq/g de membrane sèche.

10. Procédé de préparation d'un tamis moléculaire, comprenant une étape de synthèse, une étape de cristallisation, une étape de séparation et de lavage et une étape de traitement d'eaux usées ;
dans lequel
dans l'étape de synthèse, une matière première est mise en contact avec une eau pour réaction, dans lequel la matière première contient une source de silicium, un hydroxyde d'ammonium organique et une source de titane facultative ;
dans l'étape de cristallisation, le mélange réactionnel obtenu à partir de l'étape de synthèse est cristallisé ;
dans l'étape de séparation et de lavage, le mélange obtenu à partir de l'étape de cristallisation est amené à séparation solide-liquide pour produire une phase solide et une liqueur mère de cristallisation, et ladite phase solide est lavée pour obtenir un tamis moléculaire et des eaux usées de lavage ;
dans le procédé de traitement d'eaux usées, une liqueur alcaline contenant un ion ammonium organique et une eau dessalée présentant une teneur réduite en ion ammonium organique sont produites à partir d'une électrodialyse des eaux usées, et lesdites eaux usées sont ladite liqueur mère de cristallisation, lesdites eaux usées de lavage ou un mélange de la liqueur mère de cristallisation et des eaux usées de lavage dans lequel les eaux usées sont traitées en utilisant le procédé selon l'une quelconque des revendications 1 à 4,
dans lequel l'ion ammonium organique est tel que défini dans la revendication 1.

11. Procédé selon la revendication 10, dans lequel le procédé comprend en outre une, deux ou trois parmi la première étape cyclique, la deuxième étape cyclique et la troisième étape cyclique ;
dans lequel
dans la première étape cyclique, l'eau dessalée est recyclée dans l'une des étapes suivantes : comme eau pour synthèse dans l'étape de synthèse ; pour terminer la cristallisation dans l'étape de cristallisation ; comme eau de lavage dans l'étape de séparation et de lavage ;
dans la deuxième étape cyclique, la liqueur alcaline obtenue à partir de l'électrodialyse est recyclée dans l'étape de synthèse ;
dans la troisième étape cyclique, la liqueur acide obtenue en présence d'une électrodialyse à membrane bipolaire est recyclée dans l'étape de prétraitement au moins en partie en tant que précipitant.

12. Système de préparation de tamis moléculaire qui comprend une unité de synthèse, une unité de cristallisation, une unité de séparation et de lavage et une unité de traitement d'eaux usées ;
dans lequel
l'unité de synthèse est utilisée pour mettre en contact une matière première avec une eau pour réaction, et ladite matière première contient une source de silicium, un hydroxyde d'ammonium organique et une source de titane facultative ;
l'unité de cristallisation est utilisée pour cristalliser le mélange réactionnel obtenu à partir de l'étape de synthèse ;
l'unité de séparation et de lavage est utilisée pour une séparation solide-liquide du mélange obtenu à partir de l'étape de cristallisation pour produire une phase solide et une liqueur mère de cristallisation, et la phase solide est lavée pour obtenir un tamis moléculaire et des eaux usées de lavage ;
l'unité de traitement d'eaux usées est utilisée pour une électrodialyse des eaux usées afin de produire une liqueur alcaline contenant un ion ammonium organique et une eau dessalée présentant une teneur réduite en ion ammonium organique, dans lequel lesdites eaux usées sont la liqueur mère de cristallisation, les eaux usées de lavage ou un mélange de la liqueur mère de cristallisation et des eaux usées de lavage, dans lequel ladite électrodialyse est effectuée dans au moins un électrodialyseur, l'empilement de membranes de l'électrodialyseur présente au moins une unité à membranes, et les membranes dans au moins une partie de l'unité à membranes comprennent une membrane homogène échangeuse de cations de type styrène,
dans lequel l'ion ammonium organique est tel que défini dans la revendication 1.

13. Système selon la revendication 12, dans lequel l'électrodialyseur est au moins un électrodialyseur ordinaire ; les membranes dans l'unité à membranes dudit électrodialyseur ordinaire sont combinées de la manière suivante : les membranes dans l'unité à membranes sont une membrane échangeuse d'anions et une membrane échangeuse de cations ; la membrane échangeuse d'anions et la membrane échangeuse de cations divisent l'espace interne de l'unité à membranes en une chambre de liquide d'alimentation et une chambre de concentration ; la chambre de liquide d'alimentation reçoit les eaux usées,
ou dans lequel l'électrodialyseur est au moins un électrodialyseur à membrane bipolaire ; l'unité à membranes dudit électrodialyseur à membrane bipolaire adopte un, deux ou trois des procédés suivants :
Procédé 1 : les membranes dans l'unité à membranes sont une membrane bipolaire et une membrane échangeuse de cations, et la membrane bipolaire et la membrane échangeuse de cations divisent l'espace interne de l'unité à membranes en une chambre pour alcalin et une chambre de liquide d'alimentation ;
Procédé 2 : les membranes dans l'unité à membranes sont une membrane bipolaire et une membrane échangeuse d'anions, et la membrane bipolaire et la membrane échangeuse d'anions divisent l'espace interne de l'unité à membranes en une chambre pour acide et une chambre de liquide d'alimentation ;
Procédé 3 : les membranes dans l'unité à membranes sont une membrane bipolaire, une membrane échangeuse d'anions et une membrane échangeuse de cations, et ladite membrane bipolaire, ladite membrane échangeuse d'anions et ladite membrane échangeuse de cations divisent l'espace interne de l'unité à membranes en une chambre pour acide, une chambre de liquide d'alimentation et une chambre pour alcalin, dans lequel la chambre de liquide d'alimentation est située entre la chambre pour acide et la chambre pour alcalin,
ou dans lequel dans lequel l'unité de traitement d'eaux usées comprend au moins un électrodialyseur ordinaire et au moins un électrodialyseur à membrane bipolaire ;
les membranes dans l'unité à membrane dudit électrodialyseur ordinaire sont une membrane échangeuse d'anions et une membrane échangeuse de cations, et la membrane échangeuse d'anions et la membrane échangeuse de cations divisent l'espace interne de l'unité à membranes en une chambre de liquide d'alimentation et une chambre de concentration ;
les membranes dans l'unité à membranes de l'électrodialyseur à membrane bipolaire sont une membrane bipolaire, une membrane échangeuse d'anions et une membrane échangeuse de cations, et ladite membrane bipolaire, ladite membrane échangeuse d'anions et ladite membrane échangeuse de cations divisent l'espace interne de l'unité à membranes en une chambre pour acide, une chambre de liquide d'alimentation et une chambre pour alcalin, dans lequel la chambre de liquide d'alimentation est située entre la chambre pour acide et la chambre pour alcalin ;
l'électrodialyseur ordinaire est utilisé pour effectuer une électrodialyse sur les eaux usées pour produire une première eau dessalée et un concentré présentant une teneur accrue en ion ammonium organique, et ledit électrodialyseur à membrane bipolaire est utilisé pour effectuer une électrodialyse à membrane bipolaire sur le concentré pour produire une liqueur acide, une liqueur alcaline contenant un ion ammonium organique et une seconde eau dessalée.

14. Système selon l'une quelconque des revendications 12 ou 13, dans lequel le système comprend en outre une unité de prétraitement pour mettre en contact les eaux usées avec au moins un précipitant pour qu'au moins une partie du silicium dans les eaux usées forme un colloïde, et une séparation solide-liquide est effectuée pour produire une phase solide contenant du silicium et une phase liquide, et ladite phase liquide est délivrée à l'unité de traitement d'eaux usées à des fins d'électrodialyse.

15. Système selon l'une quelconque des revendications 12 à 14, dans lequel l'unité de traitement d'eaux usées comprend en outre une, deux ou trois sélectionnées parmi une canalisation de distribution d'eau dessalée, une canalisation de distribution pour récupérer un hydroxyde d'ammonium organique et une canalisation de distribution pour récupérer une liqueur acide ;
dans lequel
ladite canalisation de distribution d'eau dessalée est utilisée pour délivrer l'eau dessalée récupérée par l'unité de traitement d'eaux usées à l'une des unités suivantes : ladite unité de synthèse en tant qu'eau pour synthèse ; ladite unité de cristallisation en tant qu'eau pour terminer la cristallisation ; ladite unité de séparation et de lavage en tant qu'eau de lavage ;
ladite canalisation de distribution utilisée pour récupérer un hydroxyde d'ammonium organique est utilisée pour délivrer la liqueur alcaline contenant un hydroxyde d'ammonium organique obtenu à partir de l'électrodialyseur à membrane bipolaire dans l'unité de traitement d'eaux usées à l'unité de synthèse ;
ladite canalisation de distribution pour récupérer un acide est utilisée pour délivrer la liqueur acide obtenue à partir de l'électrodialyseur à membrane bipolaire dans l'unité de traitement d'eaux usées à ladite unité de prétraitement au moins en partie comme précipitant.
